(19) Europäisches Patentamt
European Patent Office
Office européen des brevets

(11) **EP 3 722 840 B1**

(12) **EUROPEAN PATENT SPECIFICATION**

(45) Date of publication and mention of the grant of the patent:
**04.12.2024 Bulletin 2024/49**

(21) Application number: **18885585.2**

(22) Date of filing: **05.12.2018**

(51) International Patent Classification (IPC):
***G02B 1/04*** *(2006.01)* ***C08F 218/00*** *(2006.01)*
***C08F 220/20*** *(2006.01)* ***G02B 5/30*** *(2006.01)*
***G02C 7/00*** *(2006.01)* ***G02C 7/12*** *(2006.01)*

(52) Cooperative Patent Classification (CPC):
(C-Sets available)
**G02C 7/102; C08F 4/38; C08F 222/102; G02B 1/041; G02B 5/223; G02C 7/12;**
C08F 218/24; G02B 5/30 (Cont.)

(86) International application number:
**PCT/JP2018/044787**

(87) International publication number:
**WO 2019/111969 (13.06.2019 Gazette 2019/24)**

(54) **POLYMERIZABLE COMPOSITION FOR OPTICAL MATERIAL, AND MOLDED ARTICLE**

POLYMERISIERBARE ZUSAMMENSETZUNG FÜR OPTISCHES MATERIAL UND FORMARTIKEL

COMPOSITION POLYMÉRISABLE POUR MATÉRIAU OPTIQUE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2017 JP 2017234197**
**31.05.2018 JP 2018104866**

(43) Date of publication of application:
**14.10.2020 Bulletin 2020/42**

(73) Proprietor: **Mitsui Chemicals, Inc.**
**Tokyo 104-0028 (JP)**

(72) Inventors:
- **KAWAGUCHI Masaru**
**Omuta-shi**
**Fukuoka 836-8610 (JP)**
- **KADOWAKI Shinichiro**
**Omuta-shi**
**Fukuoka 836-8610 (JP)**
- **KAWATO Nobuo**
**Omuta-shi**
**Fukuoka 836-8610 (JP)**

(74) Representative: **Mewburn Ellis LLP**
**Aurora Building**
**Counterslip**
**Bristol BS1 6BX (GB)**

(56) References cited:
**EP-A1- 3 521 322**
**WO-A1-2004/090002**
**WO-A1-2015/005391**
**WO-A2-2005/079166**
**JP-A- H0 493 310**
**JP-A- H0 525 299**
**JP-A- H03 223 308**
**JP-A- S58 167 124**
**US-A- 5 310 577**
**US-B2- 8 691 926**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 222/102, C08F 218/24;**
**G02B 1/041, C08L 69/00**

## Description

TECHNICAL FIELD

The present invention relates to a polymerizable composition for an optical material and a molded product.

BACKGROUND ART

In comparison with inorganic lenses, plastic lenses are lighter and harder to break and have thus rapidly become widespread in optical elements such as spectacle lenses and camera lenses. Since it is easy to add various kinds of additives to plastic lenses, studies have been carried out to impart desired functions with various kinds of additives. In addition, in a case where a polymerizable composition containing a predetermined compound is polymerized to form a plastic lens, a radical polymerization initiator is widely used as a polymerization initiator.

Patent Document 1 discloses that it is possible to provide a material excellent in photochromic response by including a polyol (allyl carbonate) component formed of approximately 55 to approximately 90% by weight of polyol (allyl carbonate), approximately 10 to approximately 40% by weight of an aliphatic polyurethane having ethylenic unsaturation at a terminal, and approximately 0 to approximately 5% by weight of a bifunctional monomer selected from the group consisting of allyl methacrylate and allyl acrylate, and an organic photochromic substance. This document describes that it is possible to include a radical polymerization initiator in this material.

Patent Document 2 discloses a method for producing a plastic lens for spectacles in which polymerization is carried out by a low temperature polymerization step of heating a raw material liquid including two kinds of radical polymerization initiators having different half-life temperatures in a low temperature region of less than 90°C and a high temperature polymerization step of heating in a high temperature region of a range of 90°C to 100°C performed thereafter. This document describes that it is possible to include an ultraviolet absorber in a plastic lens for spectacles.

Patent Document 3 discloses a method for producing a plastic lens having a step of carrying out radical polymerization on a composition including a (meth) acrylate-based monomer and two or more kinds of organic peroxides having different half-lives. This document describes that it is possible to include an ultraviolet absorber in a plastic lens.

Patent Document 4 discloses a composition for a plastic lens including a polymerizable monomer or the like including an allyl group and two kinds of aliphatic organic peroxides having different half-life temperatures.

Patent Document 5 discloses a method for producing a plastic lens in which a monomer in which dimethallylphthalate is the main component and two kinds of aliphatic organic peroxides having different half-life temperatures as a polymerization initiator are blended, and the blend is polymerized and formed in a desired lens mold.

Patent Document 7 concerns a polymerizable composition for lenses prepared by blending specific amounts of a photochromic compound and a specific light stabilizer such as bis(1,2,2,6,6-pentamethyl-4-piperidyl)sebacate with monomer components such as 2,2-bis(4-methacryloyloxypolyethoxyphenyl)propane and trimethylolpropane trimethacrylate.

Patent Document 8 concerns a method of producing a plastic lens and describes polymerizable compositions for optical lenses.

RELATED DOCUMENT

PATENT DOCUMENT

[Patent Document 1] Japanese Laid-open Patent Publication (Translation of PCT Application) No. H04-502931
[Patent Document 2] Japanese Laid-open Patent Publication No. 2013-213937
[Patent Document 3] Japanese Laid-open Patent Publication No. H10-147609
[Patent Document 4] Japanese Laid-open Patent Publication No. H08-127608
[Patent Document 5] Japanese Laid-open Patent Publication No. S61-144601
[Patent Document 6] Japanese Laid-open Patent Publication No. 2009-19157
[Patent Document 7] US 8691926 B2
[Patent Document 8] US 5310577 A

SUMMARY OF THE INVENTION

TECHNICAL PROBLEM

In the techniques described in the above documents, there is room for improvement in the following points.

A photochromic material formed of allyl carbonate and acryl having a large allyl carbonate amount ratio as in Patent Document 1 has room for improvement in that the transparency is low.

In addition, in a case of using a predetermined polymerizable monomer and two kinds of radical polymerization initiators having different half-life temperatures as in Patent Documents 2 to 6, there is room for improvement in the formability of the lens.

Furthermore, in a case where two kinds of radical polymerization initiators having different half-life temperatures are used as in Patent Documents 2 to 6, even if an ultraviolet absorber, a dye, or the like is added, it may not be possible to sufficiently exhibit the effects of these additions and it may not be possible to use additives exhibiting a desired effect.

As a result of intensive studies, the present inventors found that copolymerizing a specific diallyl carbonate and (meth)acrylate at a specific ratio makes it possible to obtain a plastic lens which has excellent surface hardness without impairing transparency and for which the formability is excellent and the product yield is improved. Furthermore, it was found that using two different kinds of radical polymerization initiators having specific radical residual ratios makes it possible for additives such as ultraviolet absorbers, dyes, and the like to stably exhibit a desired effect.

SOLUTION TO PROBLEM

It is possible to illustrate the present invention as follows.

[1] A polymerizable composition for an optical material including an allyl carbonate compound (A) including two or more allyloxycarbonyl groups which is represented by General Formula (1) ; a (meth)acrylate compound (B) including two or more (meth)acryl groups which is represented by General Formula (2) ; at least one kind of compound (C), selected from compounds represented by General Formulas (3) to (6) and dyes described below; and a polymerization initiator (D) including at least a radical polymerization initiator (D1) and a radical polymerization initiator (D2), in which, in 100% by weight in a total of the compound (A) and the compound (B), the compound (A) is included in an amount of more than 0% by weight and 30% by weight or less and the compound (B) is included in an amount of 70% by weight or more and less than 100% by weight, the radical polymerization initiator (D1) has a radical residual ratio after 5 hours at 50°C of 20% or more and less than 100% and a radical residual ratio after 5 hours at 70°C of 0% or more and less than 30%, and the radical polymerization initiator (D2) has a radical residual ratio after 5 hours at 70°C of 30% or more and less than 98%,

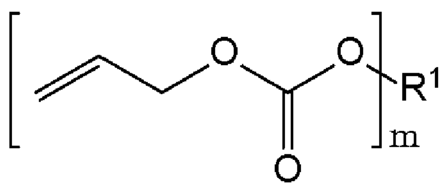

(1)

in which, in General Formula (1), $R^1$ represents a divalent to 20 valent group derived from a chained or branched aliphatic polyol with 3 to 35 carbon atoms which optionally include a hetero atom or a divalent to hexavalent group derived from a cycloaliphatic polyol with 5 to 40 carbon atoms which optionally include a hetero atom, m represents an integer of 2 to 20, and $R^1$ does not include an allyloxycarbonyl group,

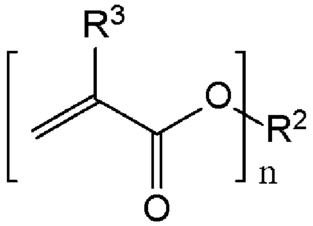

(2)

in which, in General Formula (2), $R^2$ represents a divalent to tetravalent organic group having 1 to 30 carbon atoms which optionally include a hetero atom or an aromatic group, $R^3$ represents a hydrogen atom or a methyl

group, and n represents an integer of 2 to 4,

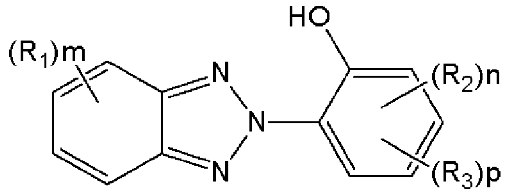

(3)

in which, in General Formula (3), $R_1$ and $R_2$ represent an alkyl group having 1 to 8 carbon atoms or a halogen atom, which may be the same or different, a plurality of $R_1$ or a plurality of $R_2$ may be the same or different, m represents an integer of 0 to 3, n represents an integer of 0 to 3, p represents an integer of 0 to 1, and $R_3$ represents a functional group having 2 to 15 carbon atoms including an ester bond,

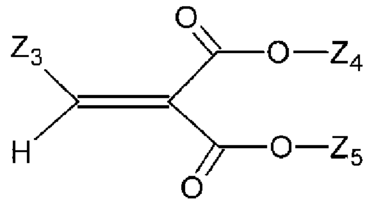

(4)

in which, in General Formula (4), $Z_3$ represents an aromatic organic group having 6 to 20 carbon atoms which optionally be substituted, or an alicyclic group having 5 to 20 carbon atoms which optionally be substituted, $Z_4$ and $Z_5$ may be the same or different and represent an alkyl group having 1 to 6 carbon atoms or an alkoxy group having 1 to 6 carbon atoms,

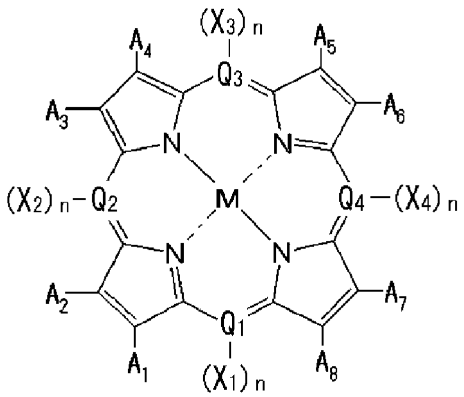

(5)

in which, in General Formula (5), $A_1$ to $A_8$ and $X_1$ to $X_4$ each independently represent a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, $A_1$ to $A_8$ optionally form a ring other than an aromatic ring via a linking group, n represents 0 or 1, $Q_1$ to $Q_4$ each independently represent a carbon atom or a nitrogen atom, M represents two hydrogen atoms, a divalent metal atom, a divalent monosubstituted metal atom, a tetravalent disubstituted metal atom, or an oxymetal atom,

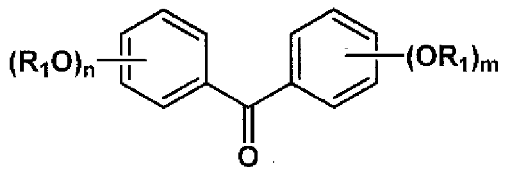

(6)

in which in General Formula (6), $R_1$ represents a hydrogen atom, or a linear or branched alkyl group having 1 to 20 carbon atoms, a plurality of $R_1$ may be the same or different, m represents an integer of 1 to 3, n represents an integer of 1 to 3, and a sum of m and n is an integer of 3 to 6,

in which dyes are at least one kind selected from anthraquinone-based dyes, perinone-based dyes, monoazo-based dyes, diazo-based dyes, and phthalocyanine-based dyes, and

wherein the polymerizable composition does not consist of the polymerizable composition of Example 15 of EP 3521322 A1.

[2] A molded product obtained by curing a polymerizable composition for an optical material, the polymerizable composition for an optical material comprising:

an allyl carbonate compound (A) including two or more allyloxycarbonyl groups which is represented by General Formula (1) ;

a (meth) acrylate compound (B) including two or more (meth) acryl groups which is represented by General Formula (2);

at least one kind of compound (C), selected from compounds represented by General Formulas (3) to (6) and dyes described below; and

a polymerization initiator (D) including at least a radical polymerization initiator (D1) and a radical polymerization initiator (D2),

wherein, in 100% by weight in a total of the compound (A) and the compound (B), the compound (A) is included in an amount of more than 0% by weight and 30% by weight or less and the compound (B) is included in an amount of 70% by weight or more and less than 100% by weight,

the radical polymerization initiator (D1) has a radical residual ratio after 5 hours at 50°C of 20% or more and less than 100% and a radical residual ratio after 5 hours at 70°C of 0% or more and less than 30%, and

the radical polymerization initiator (D2) has a radical residual ratio after 5 hours at 70°C of 30% or more and less than 98%,

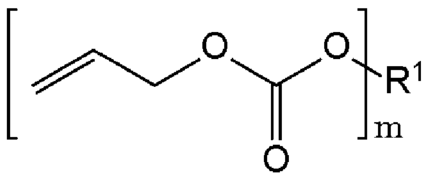

(1)

wherein, in General Formula (1), $R^1$ represents a divalent to 20 valent group derived from a chained or branched aliphatic polyol with 3 to 35 carbon atoms which optionally include a hetero atom or a divalent to hexavalent group derived from a cycloaliphatic polyol with 5 to 40 carbon atoms which optionally include a hetero atom, m represents an integer of 2 to 20, and $R^1$ does not include an allyloxycarbonyl group,

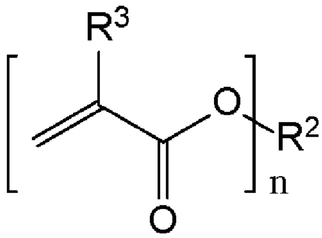

(2)

wherein, in General Formula (2), $R^2$ represents a divalent to tetravalent organic group having 1 to 30 carbon atoms which optionally include a hetero atom or an aromatic group, $R^3$ represents a hydrogen atom or a methyl group, and n represents an integer of 2 to 4,

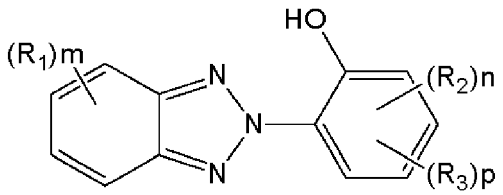

(3)

wherein, in General Formula (3), $R^1$ and $R^2$ represent an alkyl group having 1 to 8 carbon atoms or a halogen atom, which may be the same or different, a plurality of $R_1$ or a plurality of $R^2$ may be the same or different, m represents an integer of 0 to 3, n represents an integer of 0 to 3, p represents an integer of 0 to 1, and $R^3$ represents a functional group having 2 to 15 carbon atoms including an ester bond,

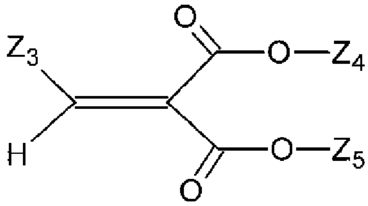

(4)

wherein, in General Formula (4), $Z_3$ represents an aromatic organic group having 6 to 20 carbon atoms which optionally be substituted, or an alicyclic group having 5 to 20 carbon atoms which optionally be substituted, $Z_4$ and $Z_5$ may be the same or different and represent an alkyl group having 1 to 6 carbon atoms or an alkoxy group having 1 to 6 carbon atoms,

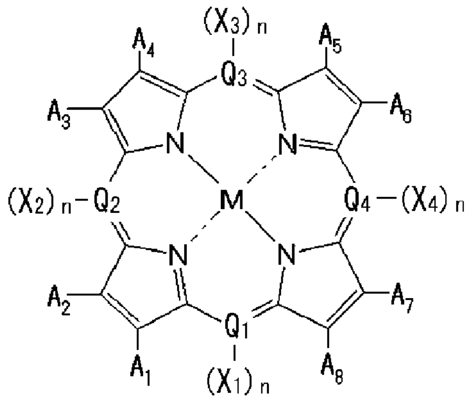

(5)

wherein, in General Formula (5), $A_1$ to $A_8$ and $X_1$ to $X_4$ each independently represent a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, $A_1$ to $A_8$ optionally form a ring other than an aromatic ring via a linking group, n represents 0 or 1, $Q_1$ to $Q_4$ each independently represent a carbon atom or a nitrogen atom, M represents two hydrogen atoms, a divalent metal atom, a divalent monosubstituted metal atom, a tetravalent disubstituted metal atom, or an oxymetal atom,

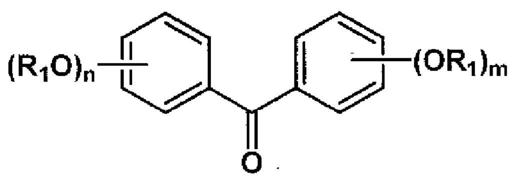

(6)

wherein, in General Formula (6), $R_1$ represents a hydrogen atom, or a linear or branched alkyl group having 1 to 20 carbon atoms, a plurality of $R_1$ may be the same or different, m represents an integer of 1 to 3, n represents an integer of 1 to 3, and a sum of m and n is an integer of 3 to 6,
wherein dyes are at least one kind selected from anthraquinone-based dyes, perinone-based dyes, monoazo-based dyes, diazo-based dyes, and phthalocyanine-based dyes,
wherein the molded product is not the molded product of Example 15 of EP 3521322 A1.

[3] The polymerizable composition for an optical material according to [1] , or the molded product according to [2] in which the compound (A) includes at least one kind selected from the group consisting of a bis (allyl carbonate) compound of at least one kind of diol selected from diethylene glycol, dipropylene glycol, triethylene glycol, tetraethylene glycol, 1,3-propanediol, 1,4-butanediol, 1,5-pentanediol, 1,6-hexanediol, neopentyl glycol, 3-methyl-1,5-pentanediol, 2-methyl-2-ethayl-1,3-propanediol, 2,2-diethyl-1,3-propanediol, 2,2,4-trimethyl-1,3-pentanediol, 1,4-dimethylolcyclohexane, and 4,8-bis(hydroxymethyl)-[5.2.1.0$^{2,6}$]tricyclodecane,

a tris (allyl carbonate) compound of at least one kind of triol selected from glycerol, trimethylolpropane, and tris(hydroxyethyl) isocyanurate,
a tetra(allyl carbonate) compound of at least one kind of tetraol selected from pentaerythritol, diglycerol, and ditrimethylol propane, a hexa(allyl carbonate) compound of dipentaerythritol, and
a hexa(allyl carbonate) compound of bispentaerythritol, and the compound (A) includes the allyl carbonate compound (A) or a mixture of the allyl carbonate compound (A) and an oligomer thereof.

[4] The polymerizable composition for an optical material according to [1] or [3], or the molded product according to [2] or [3] in which the compound (A) is at least one kind selected from

(i) a diethylene glycol bis(allyl carbonate) compound,
(ii) a bis (allyl carbonate) compound of a mixture of diethylene glycol and neopentyl glycol,
(iii) a poly(allyl carbonate) compound of a mixture of diethylene glycol and tris(hydroxyethyl) isocyanurate,
(iv) a poly (allyl carbonate) compound of a mixture of diethylene glycol and trimethylolpropane,
(v) a poly (allyl carbonate) compound of a mixture of diethylene glycol and pentaerythritol,
(vi) a poly (allyl carbonate) compound of a mixture of diethylene glycol, neopentyl glycol and pentaerythritol, and
(vii) a poly(allyl carbonate) mixture including a poly(allyl carbonate) compound of a mixture of diethylene glycol, neopentyl glycol, and pentaerythritol, and a diethylene glycol bis(allyl carbonate) compound, and

the compound (A) includes a mixture of the allyl carbonate compound (A) and an oligomer thereof.
[5] The polymerizable composition for an optical material according to any one of [1] [3] or [4], or the molded product according to any one of [2] to [4] in which the compound (B) is selected from compounds represented by General Formula (2-1) and General Formula (2-2),

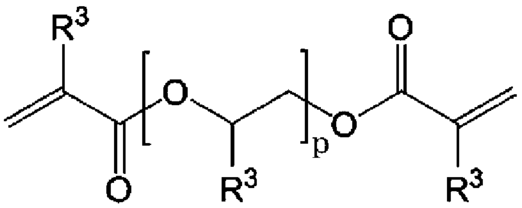
(2-1)

in which, p represents a numerical value of 1 to 100, $R^3$ represents a hydrogen atom or a methyl group, and may not be the same as each other, and

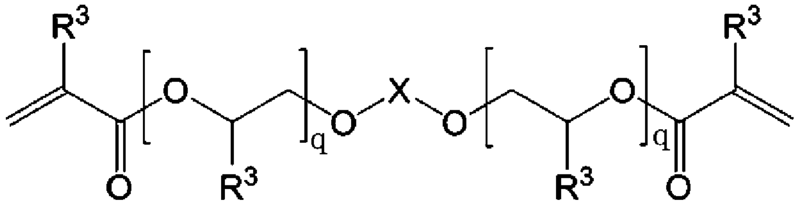
(2-2)

in which, q each represents a numerical value of 1 or more and a total of two q's represents a numerical value

of 2 to 100, $R^3$'s represent a hydrogen atom or a methyl group and may not be the same as each other, X represents a substituted or unsubstituted divalent aromatic group or a substituted or unsubstituted divalent aliphatic group which may include an aromatic group having 1 to 20 carbon atoms.

[6] The polymerizable composition for an optical material according to [5], or the molded product according to [5] in which the compound (B) is selected from the compounds represented by General Formula (2-1) in which p is 2 to 4.
[7] The polymerizable composition for an optical material according to any one of [1] or [3] to [6], or the molded product according to any one of [2] to [6]
wherein the compound (C) is selected from compounds represented by General Formulas (3) to (5) and dyes.
[8] The polymerizable composition for an optical material according to any one of [1] or [3] to [6], or the molded product according to any one of [2] to [6].
wherein the compound (C) is selected from compounds represented by General Formulas (3), (5), (6) and dyes.
[9] The polymerizable composition for an optical material according to any one of [1] or [3] to [8], or the molded product according to any one of [2] to [8]
wherein the polymerizable composition does not include a photochromic compound.
[10] An optical material including the molded product according to any one of [2] to [9].
[11] A plastic lens including the molded product according to any one of [2] to [9] .
[12] A plastic polarizing lens including a polarizing film; and a base material layer comprised of the molded product according to any one of [2] to [9] which is formed over at least one surface of the polarizing film.

In the present invention, for example, "a diol bis(allyl carbonate) compound" means a compound having a structure in which two hydroxyl groups of a diol are replaced with allyl carbonate groups . One kind of diol may be used or two or more kinds may be used in combination.
In addition, in the present invention, for example, "a bis (allyl carbonate) compound of a mixture of diethylene glycol and neopentyl glycol" means (1) a compound having a structure in which two hydroxyl groups of diethylene glycol are replaced with allyl carbonate groups; or (2) a compound having a structure in which two hydroxyl groups of neopentyl glycol are replaced with allyl carbonate groups.
In addition, in the present invention, for example, "an oligomer of a bis (allyl carbonate) compound of a mixture of diethylene glycol and neopentyl glycol" means any one of the following (3), (4), or (5), or a mixture of two or more kinds selected from the above.

(3) Oligomer of bis(allyl carbonate) compound of diethylene glycol

A compound having a structure in which two or more molecules of diethylene glycol are oligomerized via a carbonate bond and a terminal hydroxyl group is replaced with an allyl carbonate group.

(4) Oligomer of bis(allyl carbonate) compound of neopentyl glycol

A compound having a structure in which two or more molecules of neopentyl glycol are oligomerized via a carbonate bond and a terminal hydroxyl group is replaced with an allyl carbonate group.

(5) Oligomer of bis(allyl carbonate) compound of diethylene glycol and neopentyl glycol

A compound having a structure in which one molecule or more of diethylene glycol and one molecule or more of neopentyl glycol are oligomerized in the same molecule in a random combination via a carbonate bond and a terminal hydroxyl group is replaced with an allyl carbonate group.
The same also applies to a case of a "bis(allyl carbonate) compound of a trifunctional or higher polyol" and a "bis(allyl carbonate) compound using two or more kinds of diols and trifunctional or higher polyols".
In a case of "an oligomer of a bis(allyl carbonate) compound of a trifunctional or higher polyol" and "an oligomer of a bis (allyl carbonate) compound using two or more kinds of diols and trifunctional or higher polyols", a structure in which all terminal hydroxyl groups are replaced with an allyloxycarbonate group and a structure in which some of the terminal hydroxyl groups are replaced with an allyloxycarbonate group are included.
In addition, in the present invention, for example, "1 to 10" means "1 or more and 10 or less".
In addition, in the present invention, a hetero atom means an atom other than C or H.

ADVANTAGEOUS EFFECTS OF INVENTION

According to the polymerizable composition for an optical material of the present invention, it is possible to

provide a plastic lens which has excellent surface hardness without impairing transparency and for which the formability is excellent and the plastic lens product yield is improved. Furthermore, combining specific radical polymerization initiators makes it possible for additives such as ultraviolet absorbers, dyes, and the like to stably exhibit a desired effect in the obtained plastic lens.

DESCRIPTION OF EMBODIMENTS

A description will be given of the polymerizable composition for an optical material of the present invention based on the following embodiments.
The polymerizable composition for an optical material of the present embodiment includes an allyl carbonate compound (A) including two or more allyloxycarbonyl groups which is represented by General Formula (1); a (meth)acrylate compound (B) including two or more (meth)acryl groups which is represented by General Formula (2); at least one kind of compound (C), selected from compounds represented by General Formulas (3) to (6) and dyes described below; and a polymerization initiator (D) including at least a radical polymerization initiator (D1) and a radical polymerization initiator (D2) .
In 100% by weight in a total of the compound (A) and the compound (B), the compound (A) is included in an amount of more than 0% by weight and 30% by weight or less and the compound (B) is included in an amount of 70% by weight or more and less than 100% by weight.
The radical polymerization initiator (D1) has a radical residual ratio after 5 hours at 50°C of 20% or more and less than 100%, and a radical residual ratio after 5 hours at 70°C of 0% or more and less than 30%, and the radical polymerization initiator (D2) has a radical residual ratio after 5 hours at 70°C of 30% or more and less than 100%.
Here, the polymerizable composition for an optical material of the present embodiment does not include a photochromic compound.
According to the polymerizable composition for an optical material of the present embodiment, it is possible to provide a plastic lens which has excellent surface hardness without impairing transparency, and for which the formability is excellent and the plastic lens product yield is improved. Furthermore, combining specific radical polymerization initiators makes it possible for the compound (C), which is an additive, to stably exhibit a desired effect in the obtained plastic lens.
A description will be given below of each component.

[(A) Allyl Carbonate Compound]

It is possible to represent the allyl carbonate compound (A) in the present embodiment by the following formula.

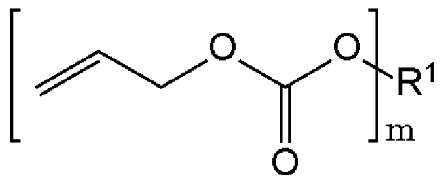
(1)

$R^1$ represents a divalent to 20 valent group derived from a chained or branched aliphatic polyol with 3 to 35 carbon atoms which optionally include a hetero atom or a divalent to 20 or lower valent group derived from a cycloaliphatic polyol with 5 to 40 carbon atoms which optionally include a hetero atom. m represents an integer of 2 to 20. $R^1$ does not include an allyloxycarbonyl group.
The polymerizable composition for an optical material of the present embodiment can include an oligomer thereof together with the allyl carbonate compound (A).
The oligomer is, for example, a poly (allyl carbonate) in which two or more molecules of polyol are linked via a carbonate bond, which is formed by a transesterification reaction between diallyl carbonate and a polyol.
This polyol can have 2 or more and 8 or less hydroxyl groups in the molecule, preferably 2 or more and 6 or less. The allyl carbonate compound is a poly (allyl carbonate) of a chained or branched chain aliphatic polyol with 3 or more and 35 or less carbon atoms. A poly(allyl carbonate) of a cycloaliphatic polyol with 5 or more and 40 or less carbon atoms in the molecule is also suitable for this purpose. It is also possible to use a mixed poly (allyl carbonate), that is, a mixture derived from two or more kinds of polyols and able to be obtained by mixing poly (allyl carbonate) of single polyols or a mixture which is able to be directly obtained by a chemical reaction started from a mixture of polyols and diallyl carbonate. Finally, it is possible for all these poly (allyl carbonates) to be in the form of monomers or mixtures of monomers and oligomers.
Specific examples of the polyol forming $R^1$ of General Formula (1) include diethylene glycol, dipropylene glycol, triethylene glycol, tetraethylene glycol, 1,3-propanediol, 1,4-butanediol, 1,5-pentanediol, 1,6-hexanediol, neopentyl glycol, 3-methyl-1,5-pentanediol, 2-methyl-2-ethyl-1,3-propanediol, 2,2-diethyl-1,3-propanediol, 2,2,4-trimethyl-1,3-pentanediol, 1,4-dimethylolcyclohexane, 4,8-bis(hydroxymethyl)-[5.2.1.0$^{2,6}$]tricyclodecane, glycerol, trimethylolpropane, tris(hydroxyethyl) isocyanurate, pentaerythritol, diglycerol, ditrimethylolpropane, dipentaerythritol, bis pentaerythritol, and the like.

Accordingly, the allyl carbonate compound (A) includes at least one kind selected from the group consisting of: bis (allyl carbonate) compound of at least one kind of diol selected from diethylene glycol, dipropylene glycol, triethylene glycol, tetraethylene glycol, 1,3-propanediol, 1,4-butanediol, 1,5-pentanediol, 1,6-hexanediol, neopentyl glycol, 3-methyl-1,5-pentanediol, 2-methyl-2-ethyl-1,3-propanediol, 2,2-diethyl-1,3-propanediol, 2,2,4-trimethyl-1,3-pentanediol, 1,4-dimethylolcyclohexane, and 4,8-bis(hydroxymethyl)-[5.2.1.0$^{2,6}$]tricyclodecane; tris (allyl carbonate) compound of at least one kind of triol selected from glycerol, trimethylolpropane, and tris(hydroxyethyl) isocyanurate; tetra(allyl carbonate) compound of at least one kind of tetraol selected from pentaerythritol, diglycerol, and ditrimethylolpropane; a hexa (allyl carbonate) compound of dipentaerythritol; and a hexa (allyl carbonate) compound of bispentaerythritol.

The allyl carbonate compound (A) and oligomers thereof include at least one kind selected from mixed poly (allyl carbonate) compounds of at least two kinds of compounds selected from the diols, the triols, the tetraols, the dipentaerythritols, and the bispentaerythritols.

Here, the "poly(allyl carbonate) compound of a mixture of at least two kinds of diols" is, for example, obtained as a mixture of the following monomer components (allyl carbonate compound (A)) and oligomer components in a case where the diols are diethylene glycol and neopentyl glycol.

Monomer components

(1) Diethylene glycol bis(allyl carbonate)
(2) Neopentyl glycol bis(allyl carbonate)
Oligomer components
(3) Oligomer including only hydrocarbon (and ether) derived from diethylene glycol
(4) Oligomer including only a hydrocarbon derived from neopentyl glycol
(5) Complex oligomers including both hydrocarbons (and ethers) derived from diethylene glycol and hydrocarbons derived from neopentyl glycol

The following are preferable examples of allyl carbonate polymerizable compounds (A) and oligomers thereof suitable for the purpose of the present invention.

(i) A mixture of a bis(allyl carbonate) compound of diethylene glycol and an oligomer thereof

It is possible to define the diethylene glycol bis(allyl carbonate) by Formula (1-1).

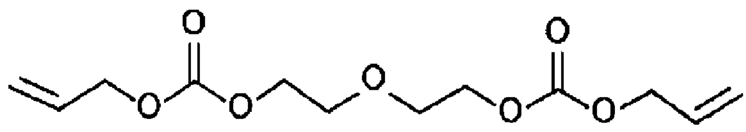

(1-1)

In addition, it is possible to define an oligomer of diethylene glycol bis(allyl carbonate) by Formula (1-2).

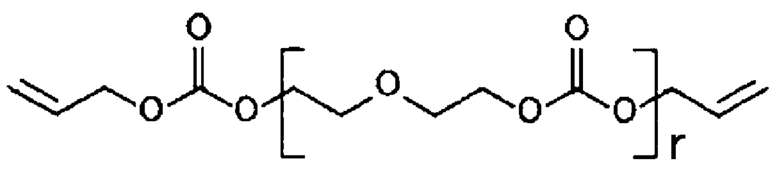

(1-2)

In the formula, r is 2 or more.

It is possible to produce compound (1-1) by reacting diethylene glycol bis(chloroformate) with allyl alcohol as described, for example, in "Encyclopedia of Chemical Technology", Kirk-Othmer, version III, Volume 2, pages 111-112. It is possible to easily produce a mixture of diethylene glycol bis (allyl carbonate) (Formula (1-1)) and an oligomer (Formula (1-2)) thereof, by ester replacement between diallyl carbonate and diethylene glycol in the presence of a basic

catalyst, for example, as described in European Patent No. 35,304. These mixtures usually include up to approximately 80% by weight of oligomers.

(ii) A mixture of a bis(allyl carbonate) compound of a mixture of diethylene glycol and neopentyl glycol and an oligomer thereof

This bis (allyl carbonate) compound is the same as the bis (allyl carbonate) in (i), except that diethylene glycol is substituted with a mixture of diethylene glycol and neopentyl glycol.

(iii) A mixture of a poly (allyl carbonate) compound of a mixture of diethylene glycol and tris(hydroxyethyl) isocyanurate and an oligomer thereof

It is possible to obtain the poly (allyl carbonate) compound by ester replacement between a diallyl carbonate of a mixture of diethylene glycol and tris(hydroxyethyl) isocyanurate, for example, as described in U.S. Patent No. 4,812,545.

(iv) A mixture of a poly (allyl carbonate) compound of a mixture of diethylene glycol and trimethylolpropane and an oligomer thereof

This poly(allyl carbonate) compound is the same as the poly(allyl carbonate) in (iii), except that the tris(hydroxyethyl) isocyanurate is substituted with trimethylol propane.

(v) A mixture of a poly(allyl carbonate) compound of a mixture of diethylene glycol and pentaerythritol and an oligomer thereof

This poly(allyl carbonate) compound is the same as the poly(allyl carbonate) compound in (iii) except that the tris(hydroxyethyl) isocyanurate is substituted with pentaerythritol.

(vi) A mixture of a poly(allyl carbonate) compound of a mixture of diethylene glycol, neopentyl glycol, and pentaerythritol and an oligomer thereof

This poly(allyl carbonate) compound is the same as the poly(allyl carbonate) compound in (v) except that diethylene glycol is substituted with two kinds of diols of diethylene glycol and neopentyl glycol.

(vii) A poly(allyl carbonate) mixture including a mixture of a poly(allyl carbonate) compound of a mixture of diethylene glycol, neopentyl glycol, and pentaerythritol and an oligomer thereof, and a mixture of a bis(allyl carbonate) compound of diethylene glycol and an oligomer thereof

Below, the "allyl carbonate compound (A) or a mixture of the allyl carbonate compound (A) and an oligomer thereof " are collectively referred to as the "allyl carbonate compound (A)".

[(B) (Meth)acrylate Compound]

It is possible to represent the (meth)acrylate compound (B) in the present embodiment by the following formula.

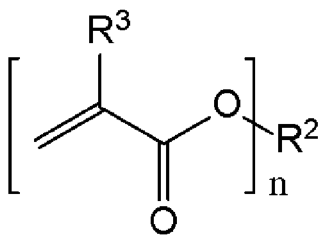

(2)

$R^2$ represents a divalent to tetravalent organic group having 1 to 30 carbon atoms which optionally include a hetero atom or an aromatic group. $R^3$ represents a hydrogen atom or a methyl group. n represents an integer of 2 to 4.

In addition, examples of the (meth) acrylate compound (B) include the compounds represented by General Formula (2-1) and General Formula (2-2).

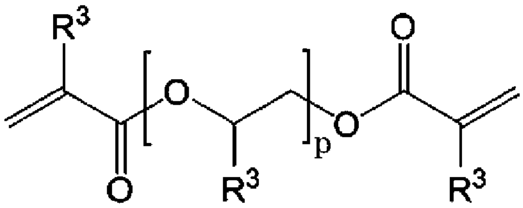

(2-1)

p represents a numerical value of 1 to 100 and $R^3$ represents a hydrogen atom or a methyl group, and may not be the same as each other. p is preferably a numerical value of 1 to 50, more preferably a numerical value of 1 to 20, even more preferably a numerical value of 2 to 10, and particularly preferably a numerical value of 2 to 4.

Examples of the (meth)acrylate compound represented by General Formula (2-1) include at least one kind selected from ethylene glycol dimethacrylate, diethylene glycol dimethacrylate, triethylene glycol dimethacrylate, tetraethylene glycol dimethacrylate, ethylene glycol diacrylate, diethylene glycol diacrylate, triethylene glycol diacrylate, tetraethylene glycol diacrylate, propylene glycol dimethacrylate, dipropylene glycol dimethacrylate, tripropylene glycol dimethacrylate, tetrapropylene glycol dimethacrylate, propylene glycol diacrylate, dipropylene glycol diacrylate, tripropylene glycol diacrylate, and tetrapropylene glycol diacrylate.

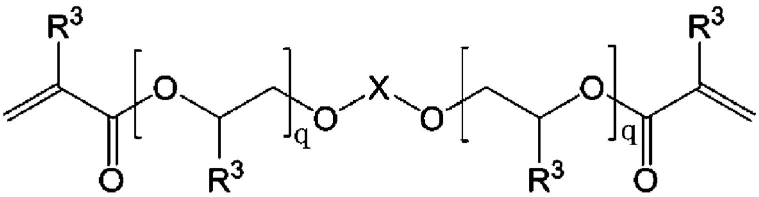

(2-2)

q each represents a numerical value of 1 or more and a total of two q's represents a numerical value of 2 to 100. $R^3$' s represent a hydrogen atom or a methyl group and may not be the same as each other. X represents a substituted or unsubstituted divalent aromatic group or a substituted or unsubstituted divalent aliphatic group which may include an aromatic group having 1 to 20 carbon atoms.

Examples of the (meth) acrylate compound represented by General Formula (2-2) include at least one kind selected from bisphenol A dimethacrylate, methylene-bis-(4,1-phenylene)-bis-(2-methacrylate), bisphenol A diacrylate, methylene-bis-(4,1-phenylene)-bis-(2-acrylate), 2,2-bis-(4-methacryloyloxyphenyl)propane, 2,2-bis-(4-acryloyloxyphenyl)propane, 2-(4-methacryloyloxyphenyl)-2-(4-methacryloyloxyethoxyphenyl)pro pane, 2-(4-acryloyloxyphenyl)-2-(4-acryloyloxyethoxyphenyl)propane, 2,2-bis-(4-methacryloyloxyethoxyphenyl)propane, 2,2-bis-(4-acryloyloxyethoxyphenyl)propane, 2-(4-methacryloyloxyethoxyphenyl)-2-(4-(methacryloyloxyethoxy)et hoxyphenyl)propane, 2-(4-acryloyloxyethoxyphenyl)-2-(4-(acryloyloxyethoxy)ethoxyphen yl)propane, 2,2-bis-(4-(methacryloyloxyethoxy)ethoxyphenyl)propane, 2,2-bis-(4-(acryloyloxyethoxy)ethoxyphenyl)propane.

Examples of (meth)acrylate compounds other than the above include at least one kind selected from the group consisting of butanediol dimethacrylate, hexamethylene dimethacrylate, 2,2-bis(4-methacryloyloxyethoxy-3,5-dibromophenyl) propane, 2,2-bis-(4-methacryloyloxypentaethoxyphenyl) propane, pentaerythritol triacrylate, pentaerythritol tetraacrylate, trimethylolpropane triacrylate, dipentaerythritol hexaacrylate, bispentaerythritol hexaacrylate, bisphenol A diglycidyl ether diacrylate, bisphenol A diglycidyl ether dimethacrylate, tetrabromobisphenol A diglycidyl ether diacrylate, and tetrabromobisphenol A diglycidyl ether dimethacrylate.

Among these exemplified compounds, the (meth) acrylate compound (B) is preferably at least one kind selected from diethylene glycol dimethacrylate, triethylene glycol dimethacrylate, diethylene glycol diacrylate, triethylene glycol diacrylate, dipropylene glycol dimethacrylate, tripropylene glycol dimethacrylate, dipropylene glycol diacrylate, and tripropylene glycol diacrylate, more preferably at least one kind selected from diethylene glycol dimethacrylate, triethylene glycol dimethacrylate, diethylene glycol diacrylate, and triethylene glycol diacrylate, and particularly preferably at least one kind selected from diethylene glycol dimethacrylate and triethylene glycol dimethacrylate.

In a total of 100% by weight of the compound (A) and the compound (B), the allyl carbonate compound (A) is able to be included as more than 0% by weight and 30% by weight or less, preferably 5% by weight or more and 30% by weight or less, more preferably 5% by weight or more and 28% by weight or less, and particularly preferably 5% by weight or more and 25% by weight or less, and the (meth)acrylate compound (B) is able to be included as 70% by weight or more and less than 100% by weight, preferably 70% by weight or more and 95% by weight or less, more preferably 72% by weight or more and 95% by weight or less, and particularly preferably 75% by weight or more and 95% by weight or less.

When the allyl carbonate compound (A) is included, the mechanical strength as a lens is improved. In addition,

when the allyl carbonate compound (A) is 30% by weight or less, the transparency is excellent. When the (meth)acrylate compound (B) is included as 70% by weight or more, it is possible to reduce the weight of the lens and transparency and weather resistance are excellent. That is, including the compound (A) and the compound (B) in this range makes it possible for the obtained resin molded product to exhibit sufficient mechanical strength, white cloudiness is suppressed, and the transparency is excellent. Furthermore, the formability is excellent and the yield of the plastic lens is improved.

[(C) Compound]

The compound (C) in the present embodiment includes at least one kind selected from the compounds represented by General Formulas (3) to (6) and a dye. A description will be given below of the compounds represented by General Formulas (3) to (6) as compounds (3) to (6), respectively.

(Compound (3))

Compound (3) is represented by General Formula (3).

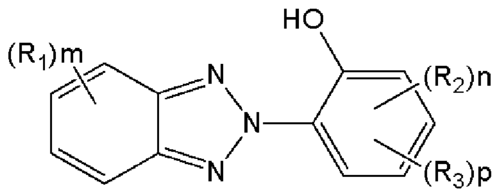

(3)

In General Formula (3), $R_1$ and $R_2$ represent an alkyl group having 1 to 8 carbon atoms or a halogen atom, which may be the same or different. A plurality of $R_1$ or a plurality of $R_2$ may be the same or different. m represents an integer of 0 to 3, n represents an integer of 0 to 3, p represents an integer of 0 to 1, and $R_3$ represents a functional group having 2 to 15 carbon atoms including an ester bond.

Compound (3) is preferably at least one kind selected from the group consisting of 2-(2-hydroxy-5-t-octylphenyl) benzotriazole, 2-(2-hydroxy-5-t-butylphenyl) benzotriazole, 2-(2-hydroxy-5-methylphenyl) benzotriazole, 2-(5-t-octyl-3-(phenylpropane-2-yl)-2-hydroxyphenyl) benzotriazole, 2-(5-t-butyl-3-(phenylpropane-2-yl)-2-hydroxyphenyl) benzotriazole, 2-(5-methyl-3-(phenylpropane-2-yl)-2-hydroxyphenyl) benzotriazole, 2-(5-octylpropionate-2-(hydroxyphenyl) benzotriazole, 2-(5-t-octyl-2-hydroxyphenyl) benzotriazole, 2-(3,5-di-t-butyl-2-hydroxyphenyl) benzotriazole, 2-(3,5-di-t-pentyl-2-hydroxyphenyl) benzotriazole, 2-(3,5-bis-(phenylpropane)-2-yl)-2-hydroxyphenyl) benzotriazole, 2-(3,5-di-t-butyl-2-hydroxyphenyl)-5-chlorobenzotriazole, 2-(3-t-butyl-2-(hydroxy-5-methylphenyl)-5-chlorobenzotriazole, 2-(4-octyloxy-2-hydroxyphenyl) benzotriazole, 2-(5-methyl-3-n-dodecyl-2-hydroxyphenyl) benzotriazole, 2-(5-methyl-2-hydroxyphenyl) benzotriazole, and 2-(5-t-butyl-2-hydroxyphenyl) benzotriazole.

Compound (3) is more preferably at least one kind selected from the group consisting of 2-(2-hydroxy-5-t-octylphenyl) benzotriazole, 2-(2-hydroxy-5-t-butylphenyl) benzotriazole, 2-(2-hydroxy-5-methylphenyl) benzotriazole, 2-(5-t-octyl-3-(phenylpropane-2-yl)-2-hydroxyphenyl) benzotriazole, 2-(5-t-butyl-3-(phenylpropane-2-yl)-2-hydroxyphenyl) benzotriazole, 2-(5-methyl-3-(phenylpropane-2-yl)-2-hydroxyphenyl) benzotriazole, 2-(5-octylpropionate-2-hydroxyphenyl) benzotriazole, 2-(3,5-di-t-pentyl-2-hydroxyphenyl) benzotriazole, 2-(3,5-bis-(phenylpropane-2-yl)-2-hydroxyphenyl) benzotriazole, 2-(3,5-di-t-butyl-2-hydroxyphenyl)-5-chlorobenzotriazole, 2-(3-t-butyl-2-hydroxy-5-methylphenyl)-5-chlorobenzotriazole, 2-(4-octyloxy-2-hydroxyphenyl) benzotriazole, even more preferably 2-(2-hydroxy-5-(t-octylphenyl) benzotriazole, 2-(2-hydroxy-5-t-butylphenyl) benzotriazole, 2-(2-hydroxy-5-methylphenyl) benzotriazole, 2-(5-t-octyl)-3-(phenylpropane-2-yl)-2-hydroxyphenyl) benzotriazole, 2-(5-t-butyl-3-(phenylpropane-2-yl)-2-hydroxyphenyl) benzotriazole, 2-(5-methyl-3-(phenylpropane-2-yl)-2-hydroxyphenyl) benzotriazole, and particularly preferably 2-(2-hydroxy-5-t-octylphenyl) benzotriazole, 2-(2-hydroxy-5-t-butylphenyl) benzotriazole, 2-(2-hydroxy-5-methylphenyl) benzotriazole.

In the present embodiment, the use amount of compound (3) is 0.0005 parts by weight or more and 5 parts by weight or less with respect to a total of 100 parts by weight of the compounds (A) and (B), preferably 0.005 parts by weight or more and 3 parts by weight or less, and even more preferably 0.01 parts by weight or more and 2 parts by weight or less.

(Compound (4))

Compound (4) is represented by General Formula (4).

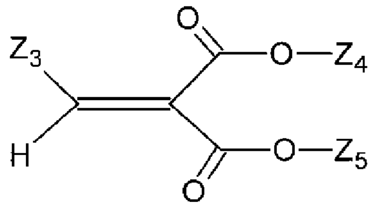

(4)

In General Formula (4), $Z_3$ represents an aromatic organic group having 6 to 20 carbon atoms which optionally be substituted or an alicyclic group having 5 to 20 carbon atoms which optionally be substituted. $Z_4$ and $Z_5$ may be the same or different and represent an alkyl group having 1 to 6 carbon atoms or an alkoxy group having 1 to 6 carbon atoms.
Examples of the aromatic organic group having 6 to 20 carbon atoms include a phenyl group, a benzyl group, a benzoyl group, a p-methoxybenzyl group, and the like. Examples of the alicyclic group having 5 or 20 carbon atoms include a cyclopentyl group, a cyclohexyl group, a cycloheptyl group, a cyclooctyl group, a cyclopentanyl group, a cyclodecanyl group, and the like.
Examples of the substituent of the substituted aromatic organic group having 6 to 20 carbon atoms or the substituent of the substituted alicyclic group having 5 to 20 carbon atoms include alkyl groups with 1 to 6 carbon atoms, alkoxy groups with 1 to 6 carbon atoms, and the like.
Examples of the compound (4) include dimethyl (p-methoxybenzylidene) malonate and diethyl (p-methoxybenzylidene) malonate, and the like. It is possible to use two or more kinds of these ultraviolet absorbers in combination.
In the present embodiment, the use amount of compound (4) is 0.0005 parts by weight or more and 5 parts by weight or less with respect to a total of 100 parts by weight of the compounds (A) and (B), preferably 0.005 parts by weight or more and 3 parts by weight or less, and more preferably 0.01 part by weight or more and 2 parts by weight or less.

(Compound (5))

Compound (5) is represented by General Formula (5).

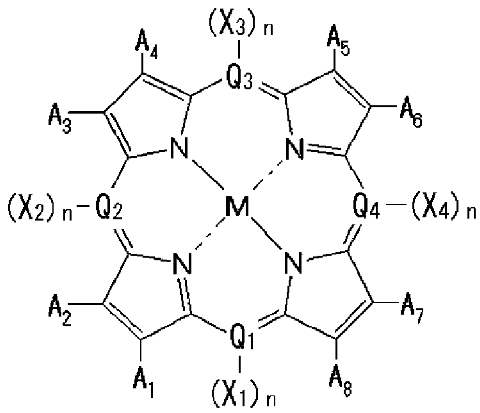

(5)

In General Formula (5), $A_1$ to $A_8$ and $X_1$ to $X_4$ each independently represent a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms. $A_1$ to $A_8$ optionally form a ring other than an aromatic ring via a linking group. n represents 0 or 1. $Q_1$ to $Q_4$ each independently represent a carbon atom or a nitrogen atom. M represents two hydrogen atoms, a divalent metal atom, a divalent monosubstituted metal atom, a tetravalent disubstituted metal atom, or an oxymetal atom.
As the compound represented by General Formula (5), a compound represented by General Formula (5-1) is preferable.

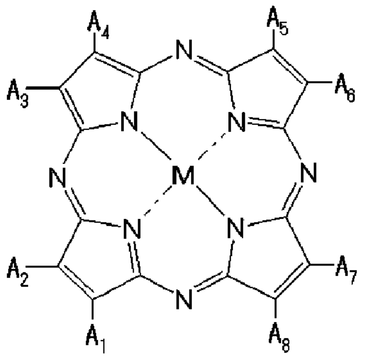

(5−1)

In General Formula (5-1), $A_1$ to $A_8$ and M have the same meaning as in General Formula (5).

In the tetraazaporphyrin compound represented by General Formula (5) or General Formula (5-1), in General Formula (5) or General Formula (5-1), M is more preferably divalent copper. Specific examples include a tetra-t-butyl-tetraazaporphyrin/copper complex represented by Formula (5a), which corresponds to the product number PD-311S (manufactured by Mitsui Chemicals, Inc.).

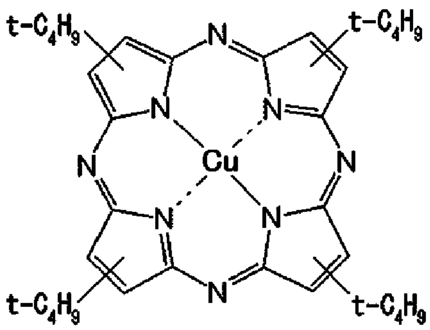

(5a)

In the present embodiment, it is possible to set the use amount of the compound (5) to be 0.01 ppm or more and 50 ppm or less in terms of the weight basis with respect to the compounds (A) and (B), preferably 0.1 ppm or more and 30 ppm or less, and more preferably 0.5 ppm or more and 20 ppm or less.

(Compound (6))

Compound (6) is represented by General Formula (6).

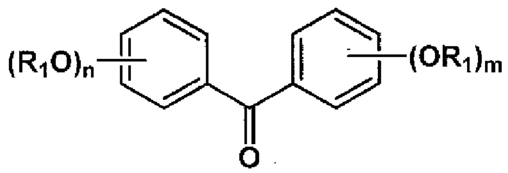

(6)

In General Formula (6), $R_1$ represents a hydrogen atom, or a linear or branched alkyl group having 1 to 20 carbon atoms. A plurality of $R_1$ may be the same or different, m represents an integer of 1 to 3, n represents an integer of 1 to 3, and the sum of m and n is an integer of 3 to 6.

Preferable examples of the linear or branched alkyl group having 1 to 20 carbon atoms include a methyl group, an ethyl group, a propyl group, an isopropyl group, a butyl group, an isobutyl group, a sec-butyl group, a tert-butyl group, a pentyl group, a hexyl group, a heptyl group, an octyl group, a 2-ethylhexyl group, a nonyl group, a decyl group, and the like, particularly preferably, a hydrogen atom, a methyl group, an ethyl group, and a propyl group.

m is an integer of 1 to 5, preferably an integer of 1 to 3,
n is an integer of 1 to 5, preferably an integer of 1 to 3,

Also, the sum of m and n is an integer of 2 to 10, preferably an integer of 3 to 6.

Examples of compound (6) include 2,2 ', 4-trihydroxybenzophenone, 2,2'-dihydroxy-4-methoxybenzophenone, 2,2'-dihydroxy-4-ethoxybenzophenone, 2,2'-dihydroxy-4-n-propoxybenzophenone, 2,2'-dihydroxy-4-isopropoxybenzophenone, 2,2'-dihydroxy-4-n-butoxybenzophenone, 2,2'-dihydroxy-4-t-butoxybenzophenone, 2-hydroxy-4,4'-dimethoxybenzophenone, 2-hydroxy-4,4'-diethoxybenzophenone, 2-hydroxy-4,4'-di-n-propoxybenzophenone, 2-hydroxy-4,4'-diisopropoxybenzophenone, 2-hydroxy-4,4'-di-n-butoxybenzophenone, 2-hydroxy-4,4'-di-t-butoxybenzophenone, 2-hydroxy-4-methoxy-4'-ethoxybenzophenone, 2-hydroxy-4-methoxy-4'-n-propoxybenzophenone, 2-hydroxy-4-methoxy-4'-isopropoxybenzophenone, 2-hydroxy-4-methoxy-4'-n-butoxybenzophenone, 2-hydroxy-4-methoxy-4'-t-butoxybenzophenone, 2-hydroxy-4-ethoxy-4'-methoxybenzophenone, 2-hydroxy-4-ethoxy-4'-n-propoxybenzophenone, 2-hydroxy-4-ethoxy-4'-isopropoxybenzophenone, 2-hydroxy-4-ethoxy-4'-n-butoxybenzophenone, 2-hydroxy-4-ethoxy-4'-t-butoxybenzophenone, 2-hydroxy-4-n-propoxy-4'-methoxybenzophenone, 2-hydroxy-4-n-propoxy-4'-ethoxybenzophenone, 2-hydroxy-4-n-propoxy-4'-isopropoxybenzophenone, 2-hydroxy-4-n-propoxy-4'-n-butoxybenzophenone, 2-hydroxy-n-propoxy-4'-t-butoxybenzophenone, 2-hydroxy-4-isopropoxy-4'-methoxybenzophenone, 2-hydroxy-4-isopropoxy-4'-ethoxybenzophenone, 2-hydroxy-4-isopropoxy-4'-n-propoxybenzophenone, 2-hydroxy-4-isopropoxy-4'-n-butoxybenzophenone, 2-hydroxy-isopropoxy-4'-t-butoxybenzophenone, 2-hydroxy-4-n-butoxy-4'-methoxybenzophenone, 2-hydroxy-4-n-butoxy-4'-ethoxybenzophenone, 2-hydroxy-4-n-butoxy-4'-n-propoxybenzophenone, 2-hydroxy-4-n-butoxy-4'-isopropoxybenzophenone, 2-hydroxy-4-n-butoxy-4'-t-butoxybenzophenone, 2-hydroxy-4-t-butoxy-4'-methoxybenzophenone, 2-hydroxy-4-t-butoxy-4'-ethoxybenzophenone, 2-hydroxy-4-t-butoxy-4'-n-propoxybenzophenone, 2-hydroxy-4-t-butoxy-4'-isopropoxybenzophenone, 2-hydroxy-4-t-butoxy-4'-n-butoxybenzophenone, 2,2',4,4'-tetrahydroxybenzophenone, 2,2'-dihydroxy-4,4'-dimethoxybenzophenone, 2,2'-dihydroxy-4,4'-diethoxybenzophenone, 2,2'-dihydroxy-4,4'-di-n-propoxybenzophenone, 2,2'-dihydroxy-4,4'-di-isopropoxybenzophenone, 2,2'-dihydroxy-4,4'-di-n-butoxybenzophenone, 2,2'-dihydroxy-4,4'-di-t-butoxybenzophenone, 2,2'-dihydroxy-4-methoxy-4'-diethoxybenzophenone, 2,2'-dihydroxy-4-methoxy-4'-n-propoxybenzophenone, 2,2'-dihydroxy-4-methoxy-4'-isopropoxybenzophenone, 2,2'-dihydroxy-4-methoxy-4'-n-butoxybenzophenone, 2,2'-dihydroxy-4-methoxy-4'-t-butoxybenzophenone, 2,2'-dihydroxy-4-ethoxy-4'-n-propoxybenzophenone, 2,2'-dihydroxy-4-ethoxy-4'-isopropoxybenzophenone, 2,2'-dihydroxy-4-ethoxy-4'-n-butoxybenzophenone, 2,2'-dihydroxy-4-ethoxy-4'-t-butoxybenzophenone, 2,2'-dihydroxy-4-n-propoxy-4'-isopropoxybenzophenone, 2,2'-dihydroxy-4-n-propoxy-4'-n-butoxybenzophenone, 2,2'-dihydroxy-4-n-propoxy-4'-t-butoxybenzophenone, 2,2'-dihydroxy-4-isopropoxy-4'-n-butoxybenzophenone, 2,2'-dihydroxy-4-isopropoxy-4'-t-butoxybenzophenone, 2,2'-dihydroxy-4-n-butoxy-4'-t-butoxybenzophenone, 2,2',4-trimethoxybenzophenone, 2,2',4-triethoxybenzophenone, 2,2',4-tri-n-propoxybenzophenone, 2,2',4-triisopropoxybenzophenone, 2,2',5-trimethoxybenzophenone, 2,2',5-triethoxybenzophenone, 2,2',5-tri-n-propoxybenzophenone, 2,2',5-triisopropoxybenzophenone, 2,4,4'-trimethoxybenzophenone, 2,4,4'-triethoxybenzophenone, 2,4,4'-tri-n-propoxybenzophenone, 2,4,4'-triisopropoxybenzophenone, 3,4',5-trimethoxybenzophenone, 3,4',5-triethoxybenzophenone, 3,4',5-tri-n-propoxybenzophenone, 3,4',5-triisopropoxybenzophenone, 2,4-dimethoxy-4'-hydroxybenzophenone, 2,4-diethoxy-4'-hydroxybenzophenone, 2,4-di-n-propoxy-4'-hydroxybenzophenone, 2,4-diisopropoxy-4'-hydroxybenzophenone, 2,2',4,4'-tetramethoxybenzophenone, 2,2',4,4'-tetraethoxybenzophenone, 3,3',4,4'-tetramethoxybenzophenone, 3,3',4,4'-tetraethoxybenzophenone, 2,3,3',4'-tetramethoxybenzophenone, 2,3,3',4'-tetraethoxybenzophenone, and the like. Among these, 2,2'-dihydroxy-4-methoxybenzophenone, 2,2'-dihydroxy-4,4'-dimethoxybenzophenone, and 2,2',4,4'-tetrahydroxybenzophenone are particularly preferable.

In the present embodiment, it is possible to set the use amount of the compound (6) to be 0.0005 parts by weight or more and 5 parts by weight or less with respect to a total of 100 parts by weight of the compounds (A) and (B), preferably 0.005 parts by weight or more and 3 parts by weight or less, and more preferably 0.01 part by weight or more and 2 parts by weight or less.

(Dye)

Examples of the dye include anthraquinone-based dyes, perinone-based dyes, monoazo-based dyes, diazo-based dyes, and phthalocyanine-based dyes, and it is possible to use one kind thereof or a combination of two or more kinds.

Examples of anthraquinone dyes include Solvent Blue 36 (1,4-bis (isopropylamino) anthracene-9,10-dione), Solvent Blue 63 (1-(methylamino)-4-(m-tolylamino) anthracene-9,10-dione), Solvent Blue 94 (1-amino-2-bromo-4-(phenylamino) anthracene-9,10-dione), Solvent Blue 97 (1,4-bis ((2,6-diethyl-4)-methylphenyl) amino) anthracene-9,10-dione), Solvent Blue 104 (1,4-bis (mesitylamino) anthracene-9,10-dione), Solvent Violet 13 (1-hydroxy-4-(p-tolylamino) anthracene-9,10-dione), Solvent Violet 13 (1,5-bis (p-tolylamino) anthracene-9,10-dione), Solvent Red 52 (3-methyl-6-(p-tolylamino)-3H-naphtho[1,2,3-de] quinoline-2,7-dione), Solvent Red 168 (1-(cyclohexylamino) anthracene-9,10-dione), Solvent Red 207 (1,5-bis (cyclohexylamino) anthracene-9,10-dione), Disperse Red 22 (1-(phenylamino) anthracene-9,10-dione), Disperse Red 60 (1-amino-4-hydroxy-2-phenoxyanthracene-9,10-dione), Solvent Violet 59 (1,4-diamino-2,3-diphenylanthracene-9,10-dione), Solvent Green 28 (1,4-bis((4-butylphenyl) amino)-5,8-dihydroxyanthracene-9,10-dione), Plast Blue 8514 (1-hydroxy-4-[(4-methylphenyl) amino]-9,10-anthracenedione), and the like.

Examples of perinone-based dyes include Solvent Orange 60 (12H-isoindolo[2,1-a] perimidin-12-one), Solvent

Orange 78, Solvent Orange 90, Solvent Red 135 (8,9,10,11-tetrachloro-12H-isoindolo[2,1-a]perimidin-12-one), Solvent Red 162, Solvent Red 179 (14H-benzo[4,5]isoquinolino[2,1-a]perimidin-14-one), and the like.

Examples of monoazo-based dyes include Solvent Red 195, Fast Orange R, Oil Red, Oil Yellow, and the like.

Examples of diazo-based dyes include Chicago Sky Blue 6B (sodium 6,6'-((1E,1'E)-(3,3'-dimethoxy-[1,1'-biphenyl]-4,4'-diyl)bis(dia zen-2,1-diyl))bis(4-amino-5-hydroxynaphthalene-1,3-disulfonate)), Evans blue (sodium 6,6'-((1E,1'E)-(3,3'-dimethyl-[1,1'-biphenyl]-4,4'-diyl)bis(diaz en-2,1-diyl))bis(4-amino-5-hydroxynaphthalene-1,3-disulfonate)), Direct Blue 15 (sodium 3,3'-((1E,1'E)-(3,3'-dimethoxy-[1,1'-biphenyl]-4,4'-diyl)bis(dia zene)-2,1-diyl))bis(5-amino-4-hydroxynaphthalene-2,7-disulfonate )), Trypan blue (sodium 3,3'-((1E,1'E)-(3,3'-dimethyl-[1,1'-biphenyl]-4,4'-diyl)bis(diaz en-2,1-diyl))bis(5-amino-4-hydroxynaphthalene-2,7-disulfonate)), Benzopurpurin 4B (sodium 3,3'-((1E,1'E)-(3,3'-dimethyl-[1,1'-biphenyl]-4,4'-diyl)bis(diaz en-2,1-diyl))bis(4-aminonaphthalene-1-sulfonate)), Congo red (sodium 3,3'-((1E,1'E)-[1,1*-biphenyl]-4,4'-diylbis(diazene-2,1-diyl))bi s(4-aminonaphthalene-1-sulfonate)), and the like.

Examples of phthalocyanine-based dyes include C.I. Direct Blue 86, C.I. Direct Blue 199, and the like.

In the present embodiment, from the viewpoint of obtaining an optical material having excellent blocking effect of blue light of approximately 420 nm, yellowness (YI), and transparency, Solvent Blue 94, Solvent Blue 97, Solvent Blue 104, Solvent Violet 59, Solvent Red 195, Disperse Red 60, Solvent Green 28, Solvent Orange 60, Plast Blue 8514 are preferable and may be used alone or in a combination of two or more kinds.

In the present embodiment, the use amount of the dye is 0.01 ppm or more and 50 ppm or less in terms of the weight basis with respect to the compounds (A) and (B), preferably 0.1 ppm or more and 30 ppm or less, and more preferably 0.5 ppm or more and 20 ppm or less.

In the present embodiment, for the compound (C), which is at least one kind selected from the compounds represented by General Formulas (3) to (6) and a dye, in a case of polymerizing a composition including a radical polymerization initiator of the related art, the structure and chemical properties thereof may change and it may not be possible to exhibit a desired effect. In a case where it is not possible for these compounds to exhibit a desired effect, it is assumed that the compounds represented by General Formulas (3), (4), and (6) and the dye have broken skeletons and, with the compound represented by General Formula (5), that the central metal came off or the skeleton is broken.

However, using the radical polymerization initiators (D1) and (D2) makes it possible to stably exhibit the effect provided by the compound (C) and to impart a desired effect to the plastic lens. For example, in a case where the specific wavelength-absorbing dye which is the compound (C) exhibits a desired effect, the transmittance of the lens at the specific wavelength becomes 60% or less. In a case where the ultraviolet absorber which is the compound (C) exhibits a desired effect, b * is 20 or less. In a case where the blue dye which is the compound (C) exhibits a desired effect, b * is less than 0.

[(D) Radical Polymerization Initiator]

In the present embodiment, the radical polymerization initiator (D) includes at least the radical polymerization initiator (D1) and the radical polymerization initiator (D2) described below.

The radical polymerization initiator (D1) has a radical residual ratio after 5 hours at 50°C of 20% or more and less than 100% and a radical residual ratio after 5 hours at 70°C of 0% or more and less than 30%. The radical polymerization initiator (D2) has a radical residual ratio after 5 hours at 70°C of 30% or more and less than 98%.

It is possible to calculate the radical residual ratio of the radical polymerization initiator as follows.

A thermal decomposition rate $k_d$ of the radical polymerization initiator at a predetermined temperature T is calculated by the following equation.

$$k_d = A\exp(-\Delta E/RT)$$

A: Frequency factor
ΔE: Activation energy
R: Gas constant (8.314 J/mol*K)
T: Absolute temperature (T)

Using the thermal decomposition rate $k_d$, it is possible to calculate the radical residual ratio of the radical polymerization initiator after the reaction for t hours at the predetermined temperature T.

$$\text{Radical residual ratio (\%)} = \exp(-k_d t) \times 100$$

t: Time (hr)

The radical polymerization initiator (D1) has a radical residual ratio after 5 hours at 50°C of 20% or more and less than 100%, preferably 20% or more and 90% or less, more preferably 40% or more and 85% or less, and a radical residual ratio after 5 hours at 70°C of 0% or more and less than 30%, preferably 0% or more and 20% or less, and more preferably 0% or more and 10% or less.

The radical polymerization initiator (D2) has a radical residual ratio after 5 hours at 70°C of 30% or more and less than 98%, preferably 40% or more and less than 98%, and more preferably 50% or more and less than 98%.

It is possible to appropriately combine the above ranges.

Examples of the radical polymerization initiator (D1) include a peroxyester-based radical polymerization initiator, a peroxydicarbonate-based radical polymerization initiator, an azo-based radical polymerization initiator, and the like and it is possible to use at least one kind thereof. In the following, the numerical values in parentheses represent "radical residual ratio after 5 hours at 50°C", and "radical residual ratio after 5 hours at 70°C" in order.

Examples of peroxyester-based radical polymerization initiators include t-amyl-peroxyneodecanoate (54.5%, 0.0%), t-butylperoxyneodecanoate (57.6%, 0.2%), t-hexylperoxypivalate (80.2%, 5.5%), t-hexylperoxyneodecanoate, 1,1,3,3-tetramethylbutylperoxyneodecanoate (27.9%, 0.0%), t-butylperoxypivalate (82.6%, 7.9%), and the like.

Examples of peroxydicarbonate-based radical polymerization initiators include diisopropylperoxydicarbonate (24.8%, 0%), di-n-propylperoxydicarbonate (28.7%, 0%), bis 4-t-butylcyclohexyl) peroxydicarbonate (28.2%, 0%), di-2-ethylhexylperoxydicarbonate (40.4%, 0%), di-sec-butylperoxydicarbonate (29.4%, 0%), and the like.

Examples of (azo)-based radical polymerization initiators include 2-2'-azobis(2,4-dimethylvaleronitrile) (73.8%, 2.0%).

Examples of the radical polymerization initiator (D2) include a peroxyester-based radical polymerization initiator, a peroxyketal-based radical polymerization initiator, a peroxycarbonate-based radical polymerization initiator, an azo-based radical polymerization initiator, and the like and it is possible to use at least one kind thereof. In the following, numerical values in parentheses represent "radical residual ratio after 5 hours at 70°C".

Examples of peroxyester-based radical polymerization initiators include 1,1,3,3-tetramethylbutylperoxy-2-ethylhexanoate (53.8%), t-butylperoxy 2-ethylhexanoate (76.8%), t-amylperoxy-2-ethylhexanoate; TRIGONOX 121 manufactured by Kayaku Akzo Co., Ltd. (78.5%), t-amyl peroxy-2-ethyl hexanoate; LUPEROX 575 manufactured by Arkema Yoshitomi Ltd. (84.4%), t-hexylperoxy 2-ethylhexanoate (70.9%), and the like.

Examples of peroxyketal-based radical polymerization initiators include 1,1-di(t-hexylperoxy) cyclohexane (96.2%), 1,1-di(t-butylperoxy) cyclohexane (97.5%), and the like.

Examples of azo-based radical polymerization initiators include 2-2'-azobis(isobutyronitrile) (50.2%), 2-2'-azobis(2-methylbutyronitrile) (60.0%), 1,1'-azobis(cyclohexane-1-carbonitrile) (97.7%), and the like.

The addition amount of the radical polymerization initiator (D) varies according to the polymerization conditions, the kind of the initiator, and the composition of the monomer, and is not able to be unconditionally limited, but is preferably in a range of 0.01 parts by weight or more and 6 parts by weight or less with respect to 100 parts by weight of the polymerizable composition, and preferably 0.2 parts by weight or more and 4 parts by weight or less. In the range described above, the curability is excellent and the occurrence of distortion and the like in the molded product is suppressed.

From the viewpoint of the effect of the present invention, in a combination of the radical polymerization initiators (D1) and (D2), it is possible to include 0.1 part by weight or more and 5.0 parts by weight or less of the polymerization initiator (D1) with respect to 100 parts by weight of the polymerizable composition, and preferably 0.2 part by weight or more and 3.0 parts by weight or less, and to include more than 0 parts by weight and 1.0 part by weight or less of the polymerization initiator (D2), and preferably 0.001 part by weight or more and 0.5 parts by weight or less. It is possible to appropriately combine the above ranges.

When curing the monomer composition using the radical polymerization initiators (D1) and (D2), it is possible to suppress the decomposition or the like of the compound (C) at the time of curing and it is possible for the compound (C) which is an additive to stably exhibit a desired effect.

In the present embodiment, from the viewpoint of the effects of the present invention, the radical polymerization initiator (D) preferably includes a combination of (D1) and (D2).

In the present embodiment, by including the radical polymerization initiator (D1) and the radical polymerization initiator (D2), (D1) easily generates radicals at a lower temperature side and (D2) easily generates radicals at a higher temperature side, thus, radicals remain in the system at a certain concentration range during polymerization, therefore, the polymerization proceeds under mild conditions, cracking, polymeric peeling, and the like of the lenses and decomposition or the like of the compound (C) which is an additive are particularly suppressed and the formability is improved, such that the yield of products is greatly improved.

Furthermore, the decomposition or the like of the compound (C), which is an additive, is suppressed and it is possible to stably exhibit the desired addition effects.

In the present embodiment, using the allyl carbonate compound (A), the (meth)acrylate compound (B), the

compound (C), and the combination of the radical polymerization initiators (D1) and (D2) makes it possible to provide a plastic spectacles lens which has an excellent surface hardness without impairing transparency and, since cracking, polymeric peeling, and the like of the lenses are particularly suppressed during polymerization and the formability is excellent, the yield of the product is greatly improved.

Furthermore, combining specific radical polymerization initiators makes it possible for the compound (C), which is an additive, to stably exhibit a desired effect in the obtained plastic lens.

The polymerization initiator (D) is preferably a combination of the following compound which is the radical polymerization initiator (D1) and the following compound which is the radical polymerization initiator (D2).

(1) A combination of t-butylperoxyneodecanoate and 1,1,3,3-tetramethylbutylperoxy-2-ethylhexanoate
(2) A combination of t-butylperoxyneodecanoate and t-amylperoxy-2-ethylhexanoate

In order to cure the polymerizable composition for an optical material of the present embodiment, the radical polymerization initiator (D) is added to the monomer composition, then it is cured by a heat curing method or an active energy ray curing method.

[Other Components]

In the present embodiment, in addition to the above components (A) to (D), a resin modifier, an internal release agent, and the like may be further included.

As the resin modifier, a radical polymerizable monomer other than the (meth) acrylate compound (B) may be added in a range in which the effect of the present invention is not impaired.

As the radically polymerizable monomer other than the (meth)acrylate compound (B), it is possible to use one kind or two or more kinds of compounds selected from the group consisting of styrene, alphamethylstyrene, alphamethylstyrene dimer, benzyl methacrylate, chlorostyrene, bromostyrene, methoxystyrene, monobenzyl fumarate, dibenzyl fumarate, dibutyl fumarate, monopentyl fumarate, and dipentyl fumarate.

<Method for Producing Polymerizable Composition for Optical Material>

The polymerizable composition for an optical material of the present embodiment is obtained by mixing an allyl carbonate compound (A), a (meth) acrylate compound (B), a compound (C) and, as necessary, further a radical polymerization initiator (D).

As a mixing method, it is possible to carry out batch mixing, or preparation is also possible by preparing a master batch of the compound (A) and the compound (B), which contains the compound (C) and, as necessary, the radical polymerization initiator (D) at high concentrations, and then diluting and mixing this master batch with the compound (A) and the compound (B). In a case of using a master batch, the dilution ratio of the master batch varies according to the compound (C), but is usually 2 times or more and 50 times or less, preferably 4 times or more and 20 times or less, and more preferably 5 times or more and 15 times or less . In this range, since the compound (C) is uniformly dispersed, suitable use is possible.

The temperature in a case where the polymerizable composition is prepared by mixing the compound (A), the compound (B), the compound (C), and further the radical polymerization initiator (D) is usually 40°C or lower, and preferably 30°C or lower. From the viewpoint of the pot life of the polymerizable composition, it may be preferable to further lower the temperature. However, in a case where the solubility of the catalyst and additives in the monomer is not good, it is also possible to dissolve the catalyst and additives in the monomer and the resin modifier in advance by heating.

In the present embodiment, the method for producing the resin molded product is not particularly limited, but examples of preferable production methods include cast polymerization. First, a polymerizable composition is injected to a space between molds held by a gasket, a tape, or the like. At this time, depending on the physical properties required for the plastic lens to be obtained, in many cases, it is preferable to carry out defoaming treatment under reduced pressure, a filtration treatment such as pressurization and depressurization, and the like as necessary.

Since the polymerization conditions vary greatly depending on the composition of the polymerizable composition, the kind and amount of the catalyst used, the shape of the mold, and the like, the conditions are not limited, but the above are performed for approximately 1 to 50 hours at a temperature of -50 to 150°C. In some cases, it is preferable to carry out the curing while holding or gradually raising the temperature in a temperature range of 10 to 150°C for 1 to 48 hours.

The resin molded product may be subjected to a treatment such as annealing as necessary. The treatment temperature is usually performed at 50 to 150°C, but is preferably performed at 90 to 140°C, and more preferably performed at 100 to 130°C.

In the present embodiment, when molding the resin, in addition to the "other components" described above, in the same manner as known molding methods, various additives such as a chain extender, a cross-linking agent, a radical scavenger, a light stabilizer, an ultraviolet stabilizer, an antioxidant, a bluing agent, an oil soluble dye, a filler, an adhesion improver, an antimicrobial agent, an antistatic agent, and the like may be added in accordance with the purpose.

<Use>

It is possible to obtain the resin of the present embodiment as a molded product of various shapes by changing the kind of mold used at the time of cast polymerization.
With the molded product obtained from the polymerizable composition for an optical material of the present embodiment, since it is possible to obtain a material having excellent surface hardness without impairing transparency, use is possible for various optical materials such as a plastic lens. In particular, it is possible to suitably use the molded product as a plastic spectacle lens or a plastic polarized lens.

[Plastic Spectacle Lens]

The plastic spectacle lens using the lens base material formed of the molded product of the present embodiment may be used after application of a coating layer on one surface or both surfaces thereof as necessary.
The plastic spectacle lens of the present embodiment is formed of a lens base material formed of the polymerizable composition described above and a coating layer.
Specific examples of the coating layer include a primer layer, a hard coat layer, an anti-reflection layer, an anti-fog coating layer, an anti-fouling layer, a water repellent layer, and the like. It is also possible to use each of these coating layers alone, or to use a plurality of coating layers in multiple layers. In a case of applying coating layers on both surfaces, the same coating layer may be applied to each surface or different coating layers may be applied to each surface.
In each of these coating layers, an infrared absorber for the purpose of protecting eyes from infrared rays, a light stabilizer, an antioxidant, and a photochromic compound for the purpose of improving the weather resistance of the lens, and a dye or a pigment for the purpose of improving the fashionability of the lens, an antistatic agent, and other known additives for improving the performance of the lens may be used in combination.
Various leveling agents for the purpose of improving applicability may be used for layers to be coated by coating.
The primer layer is usually formed between a hard coat layer described below and a lens. The primer layer is a coating layer for the purpose of improving the adhesion between the hard coat layer formed thereon and the lens, and in some cases, it is also possible to improve the impact resistance. It is possible to use any material as the primer layer as long as the material has high adhesion to the obtained lens, but in general, a primer composition mainly formed of a urethane-based resin, an epoxy-based resin, a polyester-based resin, a melanin-based resin, a polyvinyl acetal, or the like is used. The primer composition may be used with an appropriate solvent which does not affect the lens, for the purpose of adjusting the viscosity of the composition. Naturally, the primer composition may be used without a solvent.
It is also possible to form the primer layer by either method of a coating method or a dry method. In a case of using a coating method, a primer layer is formed by coating the primer composition on a lens by a known coating method such as spin coating, dip coating, or the like and then solidifying the primer composition. In a case where the drying method is used, the primer layer is formed by a known dry method such as a CVD method or a vacuum deposition method. When forming the primer layer, the surface of the lens may be subjected to a pretreatment such as an alkali treatment, a plasma treatment, an ultraviolet treatment, and the like as necessary for the purpose of improving the adhesion.
The hard coat layer is a coating layer for the purpose of imparting functions such as scratch resistance, abrasion resistance, moisture resistance, hot water resistance, heat resistance, weather resistance, and the like to the lens surface.
Generally, for the hard coat layer, a hard coat composition is used which includes an organic silicon compound having curability and one or more kinds of oxide fine particles of elements selected from the element group of Si, Al, Sn, Sb, Ta, Ce, La, Fe, Zn, W, Zr, In, and Ti and/or one kind or more of fine particles formed of composite oxides of two or more kinds of elements selected from this group of elements.
In addition to the above components, it is preferable for the hard coat composition to include at least any one of amines, amino acids, metal acetylacetonate complexes, metal salts of organic acids, perchloric acids, salts of perchloric acids, acids, metal chlorides, and multi-functional epoxy compounds. The hard coat composition may be used with an appropriate solvent which does not affect the lens or may be used without a solvent.
The hard coat layer is usually formed by coating a hard coat composition by a known coating method such as spin coating or dip coating and then curing the composition. Examples of curing methods include heat curing, curing methods using energy ray irradiation such as ultraviolet rays or visible light, and the like. In order to suppress the occurrence of interference fringes, it is preferable that the difference in refractive index of the hard coat layer and the lens be within a range of $\pm 0.1$.

An anti-reflection layer is usually formed on the hard coat layer as necessary. There are inorganic type and organic type anti-reflection layers and, in the case of an inorganic type, inorganic oxides such as $SiO_2$ and $TiO_2$ are used, and the anti-reflection layer is formed by a dry method such as a vacuum deposition method, a sputtering method, an ion plating method, an ion beam assist method, or a CVD method. In the case of an organic type, the anti-reflection layer is formed by a wet process using an organosilicon compound and a composition including silica-based fine particles having an internal cavity.

There are single layer and multiple-layer anti-reflection layers, and in the case of use as a single layer, it is preferable that the refractive index be lower than the refractive index of the hard coat layer by at least 0.1. In order to effectively exhibit the anti-reflection function, it is preferable to form a multiple-layer anti-reflection film, in which case a low refractive index film and a high refractive index film are alternately laminated. Also in this case, the refractive index difference between the low refractive index film and the high refractive index film is preferably 0.1 or more. Examples of high refractive index films include films of ZnO, $TiO_2$, $CeO_2$, $Sb_2O_5$, $SnO_2$, $ZrO_2$, $Ta_2O_5$, and the like, and examples of low refractive index films include $SiO_2$ films and the like.

On the anti-reflection layer, an anti-fogging layer, an antifouling layer, a water repellent layer may be formed, as necessary. As the method for forming the anti-fogging layer, the antifouling layer, and the water repellent layer, it is possible to use known anti-fogging treatment methods, antifouling treatment methods, water repellent treatment methods, and materials and the processing method, the processing material, and the like are not particularly limited as long as there is no adverse effect on the anti-reflection function. Examples of anti-fogging treatment methods and antifouling treatment methods include a method of covering the surface with a surfactant, a method of adding a hydrophilic film to the surface to impart water absorbency, a method of covering the surface with fine irregularities to increase the water absorbency, a method of using photocatalytic activity to impart water absorbency, a method of carrying out a super water repellent treatment to prevent adhesion of water droplets, and the like. In addition, examples of water repellent treatment methods include a method of forming a water repellent treated layer by vapor deposition or sputtering of a fluorine-containing silane compound or the like, a method of dissolving the fluorine-containing silane compound in a solvent, followed by coating to form a water repellent treated layer, and the like.

[Plastic Polarized Lens]

The plastic polarized lens of the present embodiment includes a polarizing film, and a base material layer comprised of the molded product obtained by curing the polymerizable composition for an optical material of the present embodiment which is formed over at least one surface of the polarizing film.

It is possible to form the polarizing film in the present embodiment of a thermoplastic resin. Examples of thermoplastic resins include polyester resin, polycarbonate resin, polyolefin resin, polyimide resin, polyvinyl alcohol resin, polyvinyl chloride resin, and the like. From the viewpoints of water resistance, heat resistance, and molding processability, polyester resins and polycarbonate resins are preferable, and polyester resins are more preferable.

Examples of polyester resins include polyethylene terephthalate, polyethylene naphthalate, polybutylene terephthalate, and the like, and from the viewpoints of water resistance, heat resistance, and molding processability, polyethylene terephthalate is preferable.

Specific examples of polarizing films include a polyester polarizing film containing a dichroic dye, a polyvinyl alcohol polarizing film containing iodine, a polyvinyl alcohol polarizing film containing a dichroic dye, and the like.

The polarizing film may be used after being subjected to heat treatment for drying and stabilization.

Furthermore, in order to improve the adhesion to the acrylic-based resin, the polarizing film may be used after performing one kind or two or more kinds of pretreatment selected from a primer coating treatment, a chemical treatment (gas or chemical liquid treatment such as an alkali), a corona discharge treatment, a plasma treatment, an ultraviolet irradiation treatment, an electron beam irradiation treatment, a surface roughening treatment, a flame treatment, and the like. Among such pretreatments, one kind or two or more kinds selected from a primer coating treatment, a chemical treatment, a corona discharge treatment, and a plasma treatment are particularly preferable.

In the plastic polarized lens of the present embodiment, a base material layer obtained by curing the polymerizable composition for an optical material of the present embodiment is laminated on one surface of the surface of the objective surface side or the surface of the ocular surface side of the polarizing film or on both surfaces of the surface of the objective surface side and the surface of the ocular surface side.

In a case where the base material layer in the present embodiment is formed over one surface of the polarizing film, it is possible to form the base material layer, which is formed over the other surface of the polarizing film, of the polymerizable composition for an optical material of the present embodiment, and also to form the base material layer of a plastic material such as acrylic resin, allyl carbonate resin, polycarbonate resin, polyurethane resin, polythiourethane resin, and polysulfide resin.

A process for producing of the plastic polarized lens of the present embodiment is not particularly limited, but examples thereof include a method of attaching a lens base material on both surfaces of a polarizing film, a method of

carrying out cast polymerization on a polymerizable composition on both surfaces of a polarizing film, and the like. In the present embodiment, a description will be given of an example formed by a cast polymerization method.

It is possible for the method of producing the plastic polarized lens of the present embodiment to include, for example, a step of forming a first polymerizable composition layer on the surface of the obj ective surface side of the polarizing film in a mold and forming a second polymerizable composition layer on the other surface of the polarizing film, and a step of polymerizing and curing the polymerizable composition layer to laminate the base material layer on both surfaces of the polarizing film.

The first polymerizable composition layer is formed from the polymerizable composition for an optical material of the present embodiment.

A lens casting mold is generally formed of two substantially disc-shaped glass molds held by a gasket. In the space of this lens casting mold, a polarizing film is installed such that the film surface is parallel to the mold inner surface of the opposite front side. Gaps are formed between the polarizing film and the mold. The polarizing film may be preformed.

Then, it is possible to inject a first polymerizable composition between the mold and a surface on the objective surface side of the polarizing film to form the layer of the first polymerizable composition, and then inject the second polymerizable composition into the gap between the surface on the ocular surface side of the polarizing film and the mold to form the layer of the second polymerizable composition.

In addition, it is also possible to perform this step by placing the first polymerizable composition on the forming surface of the mold for forming the objective surface of the lens, spreading the first polymerizable composition over the entire surface of the forming surface with the polarizing film, separating the mold and the surface on the objective surface side of the polarizing film by a predetermined distance via the layer of the formed first polymerizable composition and then injecting the second polymerizable composition into the gap between the polarizing film and the forming surface of the mold for forming the ocular surface of the lens and forming the layer of the second polymerizable composition.

The polymerization conditions of the polymerizable composition vary according to the composition of the polymerizable composition, the kind and amount of the catalyst used, the shape of the mold, and the like, but the polymerization is performed at a temperature of 5 to 140°C for 1 to 50 hours. In some cases, it is preferable to hold or gradually raise the temperature in a temperature range of 5 to 130°C to carry out the curing in 1 to 25 hours.

The laminate cured by polymerization is released from the mold, and the plastic polarized lens of the present embodiment can be obtained.

In the present embodiment, the laminate after polymerization/release may be subjected to a heat treatment such as annealing as necessary. From the viewpoint of the effect of the present invention, the treatment is performed at a temperature of between 90 to 150°C, preferably 110 to 130°C, and more preferably 115 to 125°C. From the viewpoint of the effect of the present invention, the treatment time is in the range of 1 to 10 hours, and preferably 2 to 5 hours.

The same coating layer as the plastic spectacle lens may be formed on the surface of the obtained base material layer.

[Examples]

Next, a more detailed description will be given of the present invention with reference to Examples, but the present invention is not limited by these Examples at all. In the Examples and Comparative Examples, the methods used for evaluation and the apparatuses used are as follows.

Confirmation of Exhibition of Effects of Compound (C)

- Transmittance: Using a Shimadzu Spectrophotometer UV-1600 manufactured by Shimadzu Corporation as an instrument for measurement, an ultraviolet-visible light spectrum (380-800 nm) was measured using a 2 mm-thick plano lens, and a transmittance of 585 nm was measured. In a case where the transmittance of the lens is 60% or less, it was determined that the specific wavelength-absorbing dye, which is the compound (C), exhibits the effects thereof (determination: o), while in a case where the transmittance of the lens exceeds 60%, it was determined that the specific wavelength absorbing-dye does not exhibit the effects thereof (determination: x).
- b*: A 2 mm thick flat plate was measured using a color difference meter CR-5 manufactured by Konica Minolta, Inc.

The observation light source was D65/10 and the color measurement results were expressed in the CIE 1976 (L*, a*, b*) color space.

L* represents lightness, a* represents red, and b* represents yellow.

In a case where b* is 20 or less, it was determined that the ultraviolet absorber which is the compound (C)

exhibits the effects thereof (determination: o), while in a case where b* exceeds 20, the ultraviolet absorber does not exhibit the effects thereof (determination: X).

In a case where b* is less than 0, it was determined that the dye which is the compound (C) exhibits the effects thereof (determination: o), while in a case where b* is 0 or more, it was determined that the dye does not exhibit the effects thereof (determination: ×).

- Transparency: The transparency of the molded product processed to a thickness of 9 mm was visually determined.
- Rockwell hardness : Measurement was performed using the M scale in accordance with ISO 2039-2.

Formability

- Lens cracking: "Lens cracking" is a phenomenon in which the lens cracks during polymerization. Five lenses of Plano 4C (2 mm thick) were created, and a case where one or more cracked after polymerization was classified as "cracked lens" (productivity failure, determination x), and a case in which no lenses cracked was classified as "no lens cracking" (good productivity, determination o) .
- Polymeric peeling: "Polymeric peeling" is a phenomenon in which the molded product is peeled from the glass mold during polymerization in a glass mold. A molded product which did not peel off during polymerization was evaluated as "A", a molded product which was peeled during polymerization but for which a circular pattern was not confirmed was evaluated as "B", and a molded product which was peeled during polymerization, and for which a circular pattern was confirmed was evaluated as "x". The circular pattern means a phenomenon in which an unpolymerized portion is formed, for example, due to peeling of the molded product from the glass mold during polymerization, and appears primarily as a circular pattern on the lens surface.
- Striae: "Striae" are a phenomenon in which the refractive index is locally different from the surrounding normal refractive index due to a difference in composition, and are observed as stripe shapes. The created sample was used in projection with a high-pressure mercury lamp (light source model OPM-252 HEG: manufactured by Ushio Inc.) and the transmitted image was visually observed for the presence or absence of striae. A sample in which no striped shape was observed was evaluated as o and a sample in which a striped shape was observed was evaluated as x.
- Release cracking: Five lenses of Plano 4C (2 mm thick) were created, and when separating the mold and the lens after completion of the polymerization, a case in which no lenses were cracked was evaluated as "A", a case in which one or more lenses were cracked was evaluated as "B", and a case in which four or more lenses were cracked was evaluated as "x".

(Material Used)

Allyl Carbonate compound (A)

- RAV 7AT (Poly(allyl carbonate) compound of diethylene glycol and pentaerythritol and oligomers thereof, manufactured by ACOMON)

(Meth)acrylate Compound (B)

- Triethylene glycol dimethacrylate (NK ester 3G, manufactured by Shin-Nakamura Chemical Co., Ltd.)

Compound (C)

- PD-311S (product name, manufactured by Mitsui Chemicals, Inc.): Tetra-t-butyl-tetraazaporphyrin/copper complex represented by Formula (5a)
- Viosorb 583 (product name, manufactured by Kyodo Chemical Co., Ltd.): 2-(2-hydroxy-5-t-octylphenyl) benzotriazole

- Tinuvin 326 (product name, manufactured by BASF): 2-(3-t-butyl-2-hydroxy-5-methylphenyl)-5-chlorobenzotriazole
- Hostavin PR-25 (product name, manufactured by CLARIANT): (p-methoxybenzylidene) dimethyl malonate
- Plast Blue 8514 (product name, manufactured by Arimoto Chemical Co., Ltd.): Anthraquinone-based dye

Radical Polymerization Initiator (D)

t-butyl-peroxyneodecanoate (Perbutyl ND, manufactured by NOF Corporation)

Radical residual ratio after 5 hours at 50°C: 57.6%
Radical residual ratio after 5 hours at 70°C: 0.2%

Bis (4-t-butylcyclohexyl) peroxydicarbonate (Peroyl TCP, manufactured by NOF Corporation)

Radical residual ratio after 5 hours at 50°C: 28.2%
Radical residual ratio after 5 hours at 70°C: 0.0%

t-amyl-peroxy neodecanoate (Luperox 546, manufactured by Arkema Yoshitomi Ltd.)

Radical residual ratio after 5 hours at 50°C: 54.5%
Radical residual ratio after 5 hours at 70°C: 0.0%

2-2'-azobis (2,4-dimethylvaleronitrile) (V65, manufactured by FUJIFILM Wako Corporation)

Radical residual ratio after 5 hours at 50°C: 73.8%
Radical residual ratio after 5 hours at 70°C: 2.0%

1,1,3,3-tetramethylbutylperoxy-2-ethylhexanoate (Perocta O, manufactured by NOF Corporation)
Radical residual ratio after 5 hours at 70°C: 53.8%
t-amylperoxy-2-ethylhexanoate (Trigonox 121, manufactured by Kayaku Akzo Co., Ltd.)
Radical residual ratio after 5 hours at 70°C: 78.5%
1,1-di(t-amylperoxy) cyclohexane (Luperox 531, manufactured by Arkema Yoshitomi Ltd.)
Radical residual ratio after 5 hours at 70°C: 98.6%

[Example 1]

Into 12.0 parts by weight of polyallyl carbonate RAV 7AT (manufactured by Acomon), 88.0 parts by weight of triethylene glycol dimethacrylate NK ester 3G (manufactured by Shin-Nakamura Chemical Co., Ltd.), and 2.0 parts by weight of $\alpha$-methylstyrene dimer, 0.001 parts by weight of PD-311S (manufactured by Yamamoto Chemicals Inc.) as an additive, and 0.55 parts by weight of t-butyl-peroxyneodecanoate and 0.15 parts by weight of 1,1,3,3-tetramethylbutylperoxy-2-ethylhexanoate as initiators were added thereto, and mixed and stirred therein so as to dissolve.

Degassing was carried out under 5 mm Hg for 60 minutes. Filtration was performed with a 1 um PTFE filter and the result was injected into a mold formed of glass molds and tape. After placing the mold into an oven, polymerization was carried out by gradually raising the temperature from 35°C to 95°C over 24 hours. After completion of the polymerization, the mold was taken out from the oven and the result was released from the mold to obtain a 2.0 mm thick flat resin plate. The obtained flat resin plate was further annealed at 110°C for 1 hour. The obtained molded product was colorless and transparent. The Rockwell hardness was 82 and it was confirmed that a good hardness was exhibited. In addition, the 585 nm transmittance was 45%. The obtained results are shown in Table 1.

[Example 2]

Into 12.0 parts by weight of polyallyl carbonate RAV 7AT (manufactured by Acomon), 88.0 parts by weight of triethylene glycol dimethacrylate NK ester 3G (manufactured by Shin-Nakamura Chemical Co., Ltd.), and 2.0 parts by weight of $\alpha$-methylstyrene dimer, 0.20 parts by weight of Viosorb 583 (manufactured by Kyodo Chemical Co., Ltd.) as an additive, and 0.55 parts by weight of t-butyl-peroxyneodecanoate and 0.15 parts by weight of 1,1,3,3-tetramethylbutylperoxy-2-ethylhexanoate as initiators were added thereto, and mixed and stirred therein so as to dissolve.

Degassing was carried out under 5 mm Hg for 60 minutes. Filtration was performed with a 1 um PTFE filter

and the result was injected into a mold formed of glass molds and tape. After placing the mold into an oven, polymerization was carried out by gradually raising the temperature from 35°C to 95°C over 24 hours. After completion of the polymerization, the mold was taken out from the oven and the result was released from the mold to obtain a 2.0 mm thick flat resin plate. The obtained flat resin plate was further annealed at 110°C for 1 hour. The obtained molded product was colorless and transparent. The Rockwell hardness was 81 and it was confirmed that a good hardness was exhibited. In addition, b* was 1.2. The obtained results are shown in Table 1.

[Example 3]

Into 12.0 parts by weight of polyallyl carbonate RAV 7AT (manufactured by Acomon), 88.0 parts by weight of triethylene glycol dimethacrylate NK ester 3G (manufactured by Shin-Nakamura Chemical Co., Ltd.), and 2.0 parts by weight of α-methylstyrene dimer, 1.5 parts by weight of Tinuvin 326 (manufactured by BASF) as an additive, and 0.55 parts by weight of t-butyl-peroxyneodecanoate and 0.15 parts by weight of 1,1,3,3-tetramethylbutylperoxy-2-ethylhexanoate as initiators were added thereto, and mixed and stirred therein so as to dissolve.

Degassing was carried out under 5 mm Hg for 60 minutes. Filtration was performed with a 1 um PTFE filter and the result was injected into a mold formed of glass molds and tape. After placing the mold into an oven, polymerization was carried out by gradually raising the temperature from 35°C to 95°C over 24 hours. After completion of the polymerization, the mold was taken out from the oven and the result was released from the mold to obtain a 2.0 mm thick flat resin plate. The obtained flat resin plate was further annealed at 110°C for 1 hour. The obtained molded product was colorless and transparent. The Rockwell hardness was 78 and it was confirmed that a good hardness was exhibited. In addition, b* was 5.8. The obtained results are shown in Table 1.

[Example 4]

Into 12.0 parts by weight of polyallyl carbonate RAV 7AT (manufactured by Acomon), 88.0 parts by weight of triethylene glycol dimethacrylate NK ester 3G (manufactured by Shin-Nakamura Chemical Co., Ltd.), and 2.0 parts by weight of α-methylstyrene dimer, 0.10 parts by weight of Hostavin PR-25 (manufactured by Clariant) as an additive, and 0.55 parts by weight of t-butyl-peroxyneodecanoate and 0.15 parts by weight of 1,1,3,3-tetramethylbutylperoxy-2-ethylhexanoate as initiators were added thereto, and mixed and stirred therein so as to dissolve.

Degassing was carried out under 5 mm Hg for 60 minutes. Filtration was performed with a 1 um PTFE filter and the result was injected into a mold formed of glass molds and tape. After placing the mold into an oven, polymerization was carried out by gradually raising the temperature from 35°C to 95°C over 24 hours. After completion of the polymerization, the mold was taken out from the oven and the result was released from the mold to obtain a 2.0 mm thick flat resin plate. The obtained flat resin plate was further annealed at 110°C for 1 hour. The obtained molded product was colorless and transparent. The Rockwell hardness was 82 and it was confirmed that a good hardness was exhibited. In addition, b* was 1.1. The obtained results are shown in Table 1.

[Example 5]

Into 12.0 parts by weight of polyallyl carbonate RAV 7AT (manufactured by Acomon), 88.0 parts by weight of triethylene glycol dimethacrylate NK ester 3G (manufactured by Shin-Nakamura Chemical Co., Ltd.), and 2.0 parts by weight of α-methylstyrene dimer, 0.001 parts by weight of Plast Blue 8514 (manufactured by Arimoto Chemical Co., Ltd.) as an additive, and 0.55 parts by weight of t-butyl-peroxyneodecanoate and 0.15 parts by weight of 1,1,3,3-tetramethylbutylperoxy-2-ethylhexanoate as initiators were added thereto, and mixed and stirred therein so as to dissolve.

Degassing was carried out under 5 mm Hg for 60 minutes. Filtration was performed with a 1 um PTFE filter and the result was injected into a mold formed of glass molds and tape. After placing the mold into an oven, polymerization was carried out by gradually raising the temperature from 35°C to 95°C over 24 hours. After completion of the polymerization, the mold was taken out from the oven and the result was released from the mold to obtain a 2.0 mm thick flat resin plate. The obtained flat resin plate was further annealed at 110°C for 1 hour. The obtained molded product was colorless and transparent. The Rockwell hardness was 82 and it was confirmed that a good hardness was exhibited. In addition, b* was -5.5. The obtained results are shown in Table 1.

[Examples 6 to 8]

As shown in Table 1, polymerization was performed in the same manner as in Example 5 to obtain molded products except that the kind of the initiator was changed. The added amount of the initiator was the same as in Example 5. The obtained results are shown in Table 1.

[Example 9]

As shown in Table 1, polymerization was performed in the same manner as in Example 5 to obtain a molded product except that 0.55 parts by weight of t-butyl-peroxyneodecanoate was changed to 0.20 parts by weight of 2-2'-azobis (2,4-dimethylvaleronitrile) (V65). The obtained results are shown in Table 1.

[Comparative Examples 1 to 3]

As shown in Table 2, polymerization was performed in the same manner as in Example 1 to obtain molded products except that the kind of the initiator was changed. The amount of the initiator was the same as in Example 1. The obtained results are shown in Table 2.

[Comparative Examples 4 to 6]

As shown in Table 2, polymerization was performed in the same manner as in Example 2 to obtain molded products except that the kind and addition amount of the compound (C) and the kind of the initiator were changed. The amount of the initiator was the same as in Example 2. The obtained results are shown in Table 2.

[Comparative Examples 7 to 9]

As shown in Table 2, polymerization was performed in the same manner as in Example 5 to obtain molded products except that the kind of the initiator was changed. The added amount of the initiator was the same as in Example 5. The obtained results are shown in Table 2.

Table 1

| | Example 1 | Example 2 | Example 3 | Example 4 | Example 5 | Example 6 | Example 7 | Example 8 | Example 9 |
|---|---|---|---|---|---|---|---|---|---|
| Allyl carbonate (A) (parts by weight) | 12.0 | 12.0 | 12.0 | 12.0 | 12.0 | 12.0 | 12.0 | 12.0 | 12.0 |
| (Meth)acrylate (B) (parts by weight) | 88.0 | 88.0 | 88.0 | 88.0 | 88.0 | 88.0 | 88.0 | 88.0 | 88.0 |
| Compound (C) (ppm) | PD-311S | VIOSORB 583 | TINUVIN 326 | Hostavin PR-25 | Plast Blue8514 | Plast Blue8514 | Plast Blue8514 | Plast Blue851 4 | Plast Blue851 4 |
| | 10 | 2000 | 15000 | 1000 | 10 | 10 | 10 | 10 | 10 |
| Radical polymerization initiator (D1) | Perbutyl ND | Perbutyl ND | Perbutyl ND | Perbutyl ND | Perbutyl ND | Peroyl TCP | Luperox5 46 | Perbuty 1 ND | V65 |
| Radical polymerization initiator (D2) | PerOcta O | PerOcta O | PerOcta O | PerOcta O | PerOcta O | PerOcta O | PerOcta O | TRIGONO X 121 | PerOcta O |
| Transmittance (585 nm) | 45% | | | | | | | | |
| | ○ | | | | | | | | |
| b* | | 1.2 | 5.8 | 1.1 | -5.5 | -3.8 | -7.0 | -7.1 | -7.6 |
| | | ○ | ○ | ○ | ○ | ○ | ○ | ○ | ○ |
| Hardness | 82 | 81 | 78 | 82 | 82 | 91 | 81 | 82 | 81 |
| Lens cracking | ○ | ○ | ○ | ○ | ○ | ○ | ○ | ○ | ○ |
| Polymeric peeling | A | A | A | A | A | B | A | A | B |
| Striae | ○ | ○ | ○ | ○ | ○ | ○ | ○ | ○ | ○ |
| Release cracking | A | A | A | A | A | A | A | A | A |

Allyl carbonate (A): RAV 7AT (manufactured by Acomon)
(Meth)acrylate (B): NK Ester 3G (manufactured by Shin-Nakamura Chemical Co., Ltd.)

Table 2

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Allyl carbonate (A) (parts by weight) | 12.0 | 12.0 | 12.0 | 12.0 | 12.0 | 12.0 | 12.0 | 12.0 | 12.0 |
| (Meth)acrylate (B) (parts bv weight) | 88.0 | 88.0 | 88.0 | 88.0 | 88.0 | 88.0 | 88.0 | 88.0 | 88.0 |
| Compound (C) (ppm) | PD-311S | PD-311S | PD-311S | VIOSORB 583 | VIOSORB 583 | TINUVIN 326 | Plast Blue8514 | Plast Blue8514 | Plast Blue8514 |
| | 10 | 10 | 10 | 2000 | 2000 | 15000 | 10 | 10 | 10 |
| Radical polymerization initiator (D1) | - | Perbutyl ND | Perbutyl ND | - | Perbutyl ND | - | Perbutyl ND | - | - |
| Radical polymerization initiator (D2) | LUPEROX 531 | LUPEROX 531 | - | LUPEROX 531 | - | LUPEROX 531 | LUPEROX 531 | LUPEROX 531 | PerOcta O |
| Transmittance (585 nm) | 79% | 45% | 45% | | | | | | |
| | × | ○ | ○ | | | | | | |
| b* | | | | 23.5 | 0.9 | >50 | -5.4 | 1.2 | -7.0 |
| | | | | × | ○ | × | ○ | × | ○ |
| Hardness | 78 | 84 | 78 | 82 | 76 | 68 | 84 | 83 | 89.8 |
| Lens cracking | × | ○ | × | × | × | × | ○ | × | × |
| Polymeric peeling | × | × | × | × | × | × | × | × | × |
| Striae | × | ○ | ○ | × | ○ | × | ○ | × | × |
| Release cracking | B | B | A | B | A | B | B | B | B |

Allyl carbonate (A): RAV 7AT (manufactured by Acomon)
(Meth)acrylate (B): NK Ester 3G (manufactured by Shin-Nakamura Chemical Co., Ltd.)

This application claims priority based on Japanese Laid-open Patent Publication No. 2017-234197 filed on December 6, 2017 and Japanese Laid-open Patent Publication No. 2018-104866, filed on May 31, 2018, the entire disclosures of which are hereby incorporated by reference.

## Claims

**1.** A polymerizable composition for an optical material comprising:

an allyl carbonate compound (A) including two or more allyloxycarbonyl groups which is represented by General Formula (1) ;
a (meth) acrylate compound (B) including two or more (meth) acryl groups which is represented by General Formula (2);
at least one kind of compound (C), selected from compounds represented by General Formulas (3) to (6) and dyes described below; and
a polymerization initiator (D) including at least a radical polymerization initiator (D1) and a radical polymerization initiator (D2),
wherein, in 100% by weight in a total of the compound (A) and the compound (B), the compound (A) is included in an amount of more than 0% by weight and 30% by weight or less and the compound (B) is included in an amount of 70% by weight or more and less than 100% by weight,
the radical polymerization initiator (D1) has a radical residual ratio after 5 hours at 50°C of 20% or more and less than 100% and a radical residual ratio after 5 hours at 70°C of 0% or more and less than 30%, and
the radical polymerization initiator (D2) has a radical residual ratio after 5 hours at 70°C of 30% or more and less than 98%,

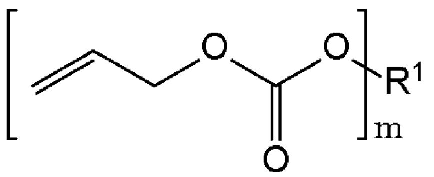
(1)

wherein, in General Formula (1), $R^1$ represents a divalent to 20 valent group derived from a chained or branched aliphatic polyol with 3 to 35 carbon atoms which optionally include a hetero atom or a divalent to hexavalent group derived from a cycloaliphatic polyol with 5 to 40 carbon atoms which optionally include a hetero atom, m represents an integer of 2 to 20, and $R^1$ does not include an allyloxycarbonyl group,

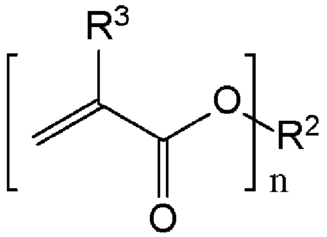
(2)

wherein, in General Formula (2), $R^2$ represents a divalent to tetravalent organic group having 1 to 30 carbon atoms which optionally include a hetero atom or an aromatic group, $R^3$ represents a hydrogen atom or a methyl group, and n represents an integer of 2 to 4,

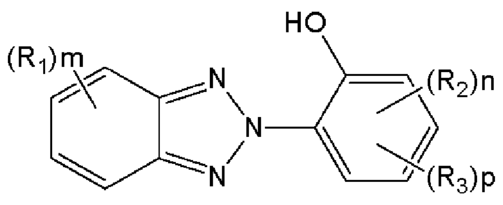
(3)

wherein, in General Formula (3), $R_1$ and $R_2$ represent an alkyl group having 1 to 8 carbon atoms or a halogen atom, which may be the same or different, a plurality of $R_1$ or a plurality of $R_2$ may be the same or different, m represents an integer of 0 to 3, n represents an integer of 0 to 3, p represents an integer of 0 to 1, and $R_3$ represents a functional group having 2 to 15 carbon atoms including an ester bond,

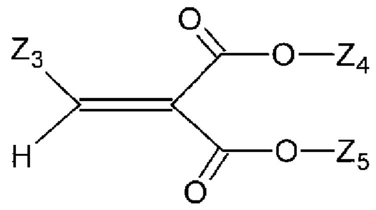

(4)

wherein, in General Formula (4), $Z_3$ represents an aromatic organic group having 6 to 20 carbon atoms which optionally be substituted, or an alicyclic group having 5 to 20 carbon atoms which optionally be substituted, $Z_4$ and $Z_5$ may be the same or different and represent an alkyl group having 1 to 6 carbon atoms or an alkoxy group having 1 to 6 carbon atoms,

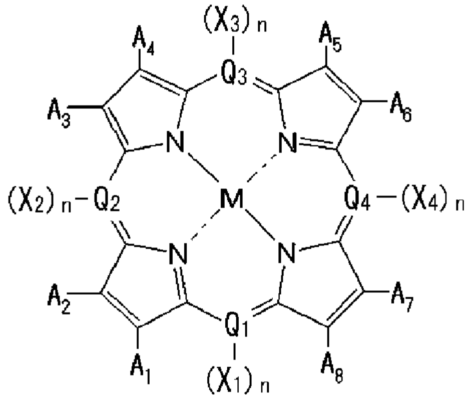

(5)

wherein, in General Formula (5), $A_1$ to $A_8$ and $X_1$ to $X_4$ each independently represent a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, $A_1$ to $A_8$ optionally form a ring other than an aromatic ring via a linking group, n represents 0 or 1, $Q_1$ to $Q_4$ each independently represent a carbon atom or a nitrogen atom, M represents two hydrogen atoms, a divalent metal atom, a divalent monosubstituted metal atom, a tetravalent disubstituted metal atom, or an oxymetal atom,

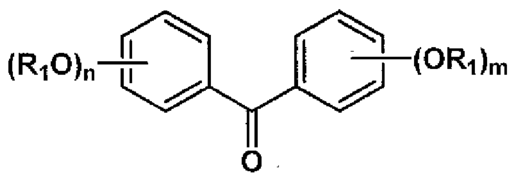

(6)

wherein, in General Formula (6), $R_1$ represents a hydrogen atom, or a linear or branched alkyl group having 1 to 20 carbon atoms, a plurality of $R_1$ may be the same or different, m represents an integer of 1 to 3, n represents an integer of 1 to 3, and a sum of m and n is an integer of 3 to 6,
wherein dyes are at least one kind selected from anthraquinone-based dyes, perinone-based dyes, monoazo-based dyes, diazo-based dyes, and phthalocyanine-based dyes, and
wherein the polymerizable composition does not consist of the polymerizable composition of Example 15 of WO 2018/062384.

**2.** A molded product obtained by curing a polymerizable composition for an optical material, the polymerizable composition for an optical material comprising:

an allyl carbonate compound (A) including two or more allyloxycarbonyl groups which is represented by General Formula (1) ;
a (meth) acrylate compound (B) including two or more (meth) acryl groups which is represented by General Formula (2);
at least one kind of compound (C), selected from compounds represented by General Formulas (3) to (6) and dyes described below; and
a polymerization initiator (D) including at least a radical polymerization initiator (D1) and a radical polymerization initiator (D2),
wherein, in 100% by weight in a total of the compound (A) and the compound (B), the compound (A) is included in an amount of more than 0% by weight and 30% by weight or less and the compound (B) is included in an amount of 70% by weight or more and less than 100% by weight,
the radical polymerization initiator (D1) has a radical residual ratio after 5 hours at 50°C of 20% or more and less than 100% and a radical residual ratio after 5 hours at 70°C of 0% or more and less than 30%, and
the radical polymerization initiator (D2) has a radical residual ratio after 5 hours at 70°C of 30% or more and less than 98%,

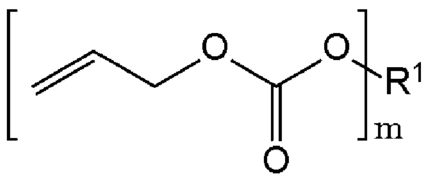
(1)

wherein, in General Formula (1), $R^1$ represents a divalent to 20 valent group derived from a chained or branched aliphatic polyol with 3 to 35 carbon atoms which optionally include a hetero atom or a divalent to hexavalent group derived from a cycloaliphatic polyol with 5 to 40 carbon atoms which optionally include a hetero atom, m represents an integer of 2 to 20, and $R^1$ does not include an allyloxycarbonyl group,

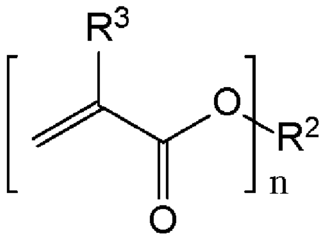
(2)

wherein, in General Formula (2), $R^2$ represents a divalent to tetravalent organic group having 1 to 30 carbon atoms which optionally include a hetero atom or an aromatic group, $R^3$ represents a hydrogen atom or a methyl group, and n represents an integer of 2 to 4,

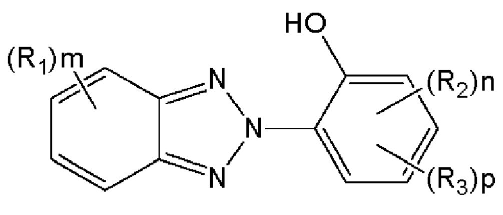
(3)

wherein, in General Formula (3), $R_1$ and $R_2$ represent an alkyl group having 1 to 8 carbon atoms or a halogen atom, which may be the same or different, a plurality of $R_1$ or a plurality of $R_2$ may be the same or different, m represents an integer of 0 to 3, n represents an integer of 0 to 3, p represents an integer of 0 to 1, and $R_3$ represents a functional group having 2 to 15 carbon atoms including an ester bond,

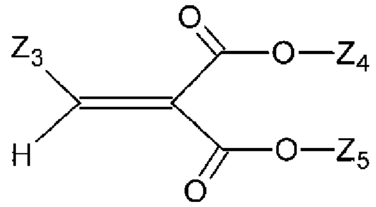

(4)

wherein, in General Formula (4), $Z_3$ represents an aromatic organic group having 6 to 20 carbon atoms which optionally be substituted, or an alicyclic group having 5 to 20 carbon atoms which optionally be substituted, $Z_4$ and $Z_5$ may be the same or different and represent an alkyl group having 1 to 6 carbon atoms or an alkoxy group having 1 to 6 carbon atoms,

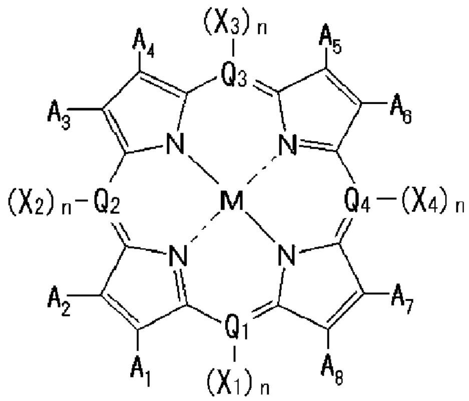

(5)

wherein, in General Formula (5), $A_1$ to $A_8$ and $X_1$ to $X_4$ each independently represent a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, $A_1$ to $A_8$ optionally form a ring other than an aromatic ring via a linking group, n represents 0 or 1, $Q_1$ to $Q_4$ each independently represent a carbon atom or a nitrogen atom, M represents two hydrogen atoms, a divalent metal atom, a divalent monosubstituted metal atom, a tetravalent disubstituted metal atom, or an oxymetal atom,

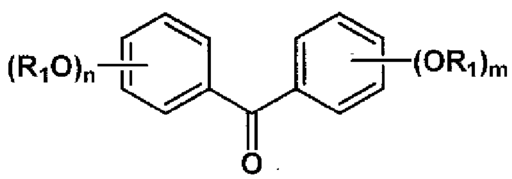

(6)

wherein, in General Formula (6), $R_1$ represents a hydrogen atom, or a linear or branched alkyl group having 1 to 20 carbon atoms, a plurality of $R_1$ may be the same or different, m represents an integer of 1 to 3, n represents an integer of 1 to 3, and a sum of m and n is an integer of 3 to 6,
wherein dyes are at least one kind selected from anthraquinone-based dyes, perinone-based dyes, monoazo-based dyes, diazo-based dyes, and phthalocyanine-based dyes,
wherein the molded product is not the molded product of Example 15 of WO 2018/062384.

3. The polymerizable composition for an optical material according to claim 1 or the molded product according to claim 2,

wherein the compound (A) includes at least one kind selected from the group consisting of a bis (allyl carbonate) compound of at least one kind of diol selected from diethylene glycol, dipropylene glycol, triethylene glycol, tetraethylene glycol, 1,3-propanediol, 1,4-butanediol, 1,5-pentanediol, 1,6-hexanediol, neopentyl glycol, 3-methyl-1,5-pentanediol, 2-methyl-2-ethyl-1,3-propanediol, 2,2-diethyl-1,3-propanediol, 2,2,4-trimethyl-1,3-pentanediol, 1,4-dimethylolcyclohexane, and 4,8-bis(hydroxymethyl)-[5.2.1.$0^{2,6}$]tricyclodecane,
a tris (allyl carbonate) compound of at least one kind of triol selected from glycerol, trimethylolpropane, and tris(hydroxyethyl) isocyanurate,
a tetra(allyl carbonate) compound of at least one kind of tetraol selected from pentaerythritol, diglycerol, and ditrimethylol propane,
a hexa(allyl carbonate) compound of dipentaerythritol, and
a hexa(allyl carbonate) compound of bispentaerythritol, and
the compound (A) is the allyl carbonate compound (A) or a mixture of the allyl carbonate compound (A) and an oligomer thereof.

4. The polymerizable composition for an optical material according to claim 1 or 3, or the molded product according to claim 2 or 3 wherein the compound (A) is at least one kind selected from

(i) a diethylene glycol bis(allyl carbonate) compound,
(ii) a bis (allyl carbonate) compound of a mixture of diethylene glycol and neopentyl glycol,
(iii) a poly(allyl carbonate) compound of a mixture of diethylene glycol and tris(hydroxyethyl) isocyanurate,
(iv) a poly (allyl carbonate) compound of a mixture of diethylene glycol and trimethylolpropane,
(v) a poly (allyl carbonate) compound of a mixture of diethylene glycol and pentaerythritol,
(vi) a poly (allyl carbonate) compound of a mixture of diethylene glycol, neopentyl glycol and pentaerythritol, and
(vii) a poly(allyl carbonate) mixture including a poly(allyl carbonate) compound of a mixture of diethylene glycol, neopentyl glycol, and pentaerythritol, and a diethylene glycol bis(allyl carbonate) compound, and

the compound (A) includes a mixture of the allyl carbonate compound (A) and an oligomer thereof.

5. The polymerizable composition for an optical material according to any one of claims 1, 3 or 4, or the molded product according to any one of claims 2 to 4 wherein the compound (B) is selected from compounds represented by General Formula (2-1) and General Formula (2-2),

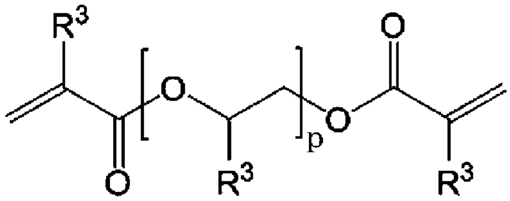

(2-1)

wherein, p represents a numerical value of 1 to 100, $R^3$ represents a hydrogen atom or a methyl group, and may not be the same as each other, and

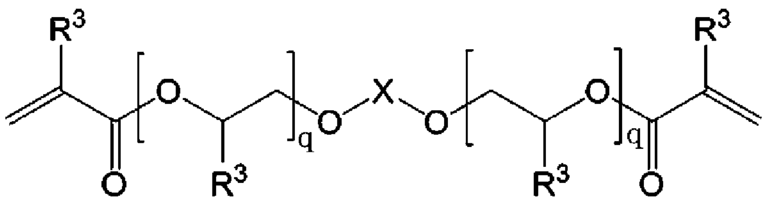

(2-2)

wherein, q each represents a numerical value of 1 or more and a total of two q represent a numerical value of 2 to 100, $R^3$ represent a hydrogen atom or a methyl group and may not be the same as each other, X represents a substituted or unsubstituted divalent aromatic group or a substituted or unsubstituted divalent aliphatic group which may include an aromatic group having 1 to 20 carbon atoms.

6. The polymerizable composition for an optical material according to claim 5, or the molded product according to claim 5 wherein the compound (B) is selected from the compounds represented by General Formula (2-1) in which p is 2 to 4.

7. The polymerizable composition for an optical material according to any one of claims 1 or 3 to 6, or the molded product according to any one of claims 2 to 6
wherein the compound (C) is selected from compounds represented by General Formulas (3) to (5) and dyes.

**8.** The polymerizable composition for an optical material according to any one of claims 1 or 3 to 6, or the molded product according to any one of claims 2 to 6
wherein the compound (C) is selected from compounds represented by General Formulas (3), (5), (6) and dyes.

**9.** The polymerizable composition for an optical material according to any one of claims 1 or 3 to 8, or the molded product according to any one of claims 2 to 8
wherein the polymerizable composition does not include a photochromic compound.

**10.** An optical material comprising:
the molded product according to any one of claims 2 to 9.

**11.** A plastic lens comprising:
the molded product according to any one of claims 2 to 9.

**12.** A plastic polarizing lens comprising:

a polarizing film; and
a base material layer comprised of the molded product according to any one of claims 2 to 9 which is formed over at least one surface of the polarizing film.

**Patentansprüche**

**1.** Polymerisierbare Zusammensetzung für ein optisches Material, die Folgendes umfasst:

eine Allylcarbonat-Verbindung (A), die zwei oder mehr Allyloxycarbonyl-Gruppen umfasst und die durch die allgemeine Formel (1) dargestellt ist,
eine (Meth)acrylat-Verbindung (B), die zwei oder mehr (Meth)acryl-Gruppen umfasst und die durch die allgemeine Formel (2) dargestellt ist,
zumindest eine Art einer Verbindung (C), die aus Verbindungen, die durch die allgemeinen Formeln (3) bis (6) dargestellt sind, und nachfolgend beschriebenen Farbstoffen ausgewählt ist, und
einen Polymerisationsinitiator (D), der zumindest einen radikalischen Polymerisationsinitiator (D1) und einen radikalischen Polymerisationsinitiator (D2) umfasst;
wobei in 100 Gew.-% der Summe von Verbindung (A) und Verbindung (B) die Verbindung (A) in einer Menge von mehr als 0 Gew.-% und 30 Gew.-% oder weniger enthalten ist und die Verbindung (B) in einer Menge von 70 Gew.-% oder mehr und weniger als 100 Gew.-% enthalten ist;
wobei der radikalische Polymerisationsinitiator (D1) nach 5 h bei 50 °C einen Anteil an radikalischen Resten von 20 % oder mehr und weniger als 100 % und nach 5 h bei 70 °C einen Anteil an radikalischen Resten von 0 % oder mehr und weniger als 30 % aufweist und
wobei der radikalische Polymerisationsinitiator (D2) nach 5 h bei 70 °C einen Anteil an radikalischen Resten von 30 % oder mehr und weniger als 98 % aufweist;

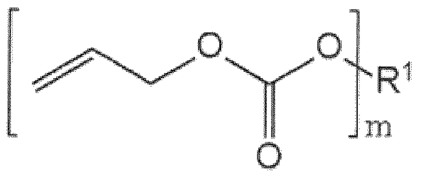
(1)

wobei in der allgemeinen Formel (1) $R^1$ für eine zweiwertige bis 20-wertige Gruppe steht, die von einem unverzweigten oder verzweigten aliphatischen Polyol mit 3 bis 35 Kohlenstoffatomen abgeleitet ist, die gegebenenfalls ein Heteroatom oder eine zweiwertige bis sechswertige Gruppe umfasst, die von einem cycloaliphatischen Polyol mit 5 bis 40 Kohlenstoffatomen abgeleitet ist, das gegebenenfalls ein Heteroatom umfast, m für eine ganze Zahl von 2 bis 20 steht und $R^1$ keine Allyloxycarbonyl-Gruppe umfasst;

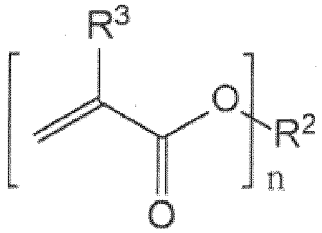

(2)

wobei in der allgemeinen Formel (2) $R^2$ für eine zweiwertige bis vierwertige organische Gruppe mit 1 bis 30 Kohlenstoffatomen steht, die gegebenenfalls ein Heteroatom oder eine aromatische Gruppe umfast, $R^3$ für ein Wasserstoffatom oder eine Methylgruppe steht, und n für eine ganze Zahl von 2 bis 4 steht;

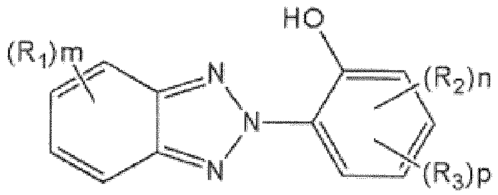

(3)

wobei in der allgemeinen Formel (3) $R_1$ und $R_2$ für eine Alkylgruppe mit 1 bis 8 Kohlenstoffatomen oder ein Halogenatom stehen, die gleich oder unterschiedlich sein können, wobei eine Vielzahl von $R_1$ oder eine Vielzahl von $R_2$ gleich oder unterschiedlich sein können, m für eine ganze Zahl von 0 bis 3 steht, n für eine ganze Zahl von 0 bis 3 steht, p für eine ganze Zahl von 0 bis 1 steht und $R_3$ für eine funktionelle Gruppe mit 2 bis 15 Kohlenstoffatomen steht, die eine Esterbindung umfasst;

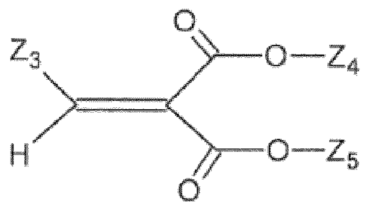

(4)

wobei in der allgemeinen Formel (4) $Z_3$ für eine aromatische organische Gruppe mit 6 bis 20 Kohlenstoffatomen, die gegebenenfalls substituiert ist, oder eine alizyklische Gruppe mit 5 bis 20 Kohlenstoffatomen, die gegebenenfalls substituiert ist, steht, $Z_4$ und $Z_5$ gleich oder unterschiedlich sein können und für eine Alkylgruppe mit 1 bis 6 Kohlenstoffatomen oder eine Alkoxygruppe mit 1 bis 6 Kohlenstoffatomen stehen;

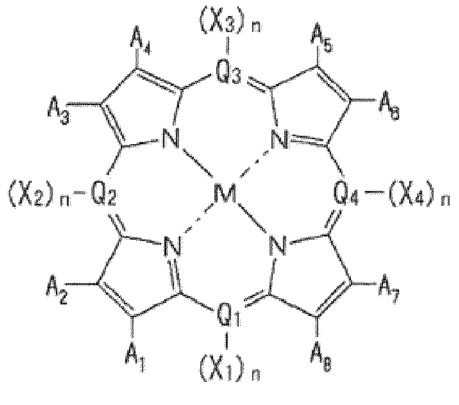

(5)

wobei in der allgemeinen Formel (5) $A_1$ bis $A_8$ und $X_1$ bis $X_4$ jeweils unabhängig für ein Wasserstoffatom, ein Halogenatom, eine Nitrogruppe, eine Cyanogruppe, eine Hydroxygruppe, eine Aminogruppe, eine Carboxylgruppe, eine Schulfonsäuregruppe, eine unverzweigte, verzweigte oder zyklische Alkylgruppe mit 1 bis 20 Kohlenstoffatomen, eine Alkoxygruppe mit 1 bis 20 Kohlenstoffatomen, eine Aryloxygruppe mit 6

bis 20 Kohlenstoffatomen, eine Monoalkylaminogruppe mit 1 bis 20 Kohlenstoffatomen, eine Dialkylaminogruppe mit 2 bis 20 Kohlenstoffatomen, eine Dialkylaminogruppe mit 7 bis 20 Kohlenstoffatomen, eine Aralkylgruppe mit 7 bis 20 Kohlenstoffatomen, eine Arylgruppe mit 6 bis 20 Kohlenstoffatomen, eine Heteroarylgruppe, eine Alkylthiogruppe mit 6 bis 20 Kohlenstoffatomen oder eine Arylthiogruppe mit 6 bis 20 Kohlenstoffatomen stehen, $A_1$ bis $A_8$ gegebenenfalls über eine Linkergruppe einen Ring bilden, der kein aromatischer Ring ist, n = 0 oder 1 ist, $Q_1$ bis $Q_4$ jeweils unabhängig für ein Kohlenstoffatom oder ein Stickstoffatom stehen, M für zwei Wasserstoffatome, ein zweiwertiges Metallatom, ein zweiwertiges monosubstituiertes Metallatom, ein vierwertiges disubstituiertes Metallatom oder ein Oxymetallatom steht;

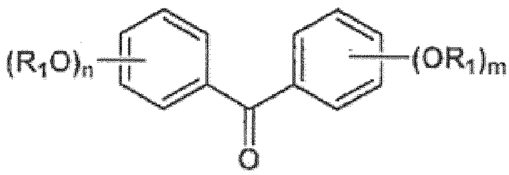

(6)

wobei in der allgemeinen Formel (6) $R_1$ für ein Wasserstoffatom oder eine unverzweigte oder verzweigte Alkylgruppe mit 1 bis 20 Kohlenstoffatomen steht, eine Vielzahl von $R_1$ gleich oder unterschiedlich sein können, m für eine ganze Zahl von 1 bis 3 steht, n für eine ganze Zahl von 1 bis 3 steht und die Summe von m + n = 3 bis 6 ist;

wobei die Farbstoffe zumindest eine Art, ausgewählt aus Anthrachinon-basierten Farbstoffen, Perinon-basierten Farbstoffen, Monoazo-basierten Farbstoffen, Diazo-basierten Farbstoffen und Phthalocyanin-basierten Farbstoffen sind; und

wobei die polymerisierbare Zusammensetzung nicht aus der polymerisierbaren Zusammensetzung aus Beispiel 15 der WO 2018/062384 besteht.

**2.** Formprodukt, das durch Härten einer polymerisierbaren Zusammensetzung für ein optisches Material erhältlich ist, wobei die polymerisierbare Zusammensetzung für ein optisches Material Folgendes umfasst:

eine Allylcarbonat-Verbindung (A), die zwei oder mehr Allyloxycarbonyl-Gruppen umfasst und die durch die allgemeine Formel (1) dargestellt ist,

eine (Meth)acrylat-Verbindung (B), die zwei oder mehr (Meth)acryl-Gruppen umfasst und die durch die allgemeine Formel (2) dargestellt ist,

zumindest eine Art einer Verbindung (C), die aus Verbindungen, die durch die allgemeinen Formeln (3) bis (6) dargestellt sind, und nachfolgend beschriebenen Farbstoffen ausgewählt ist, und

einen Polymerisationsinitiator (D), der zumindest einen radikalischen Polymerisationsinitiator (D1) und einen radikalischen Polymerisationsinitiator (D2) umfasst;

wobei in 100 Gew.-% der Summe von Verbindung (A) und Verbindung (B) die Verbindung (A) in einer Menge von mehr als 0 Gew.-% und 30 Gew.-% oder weniger enthalten ist und die Verbindung (B) in einer Menge von 70 Gew.-% oder mehr und weniger als 100 Gew.-% enthalten ist;

wobei der radikalische Polymerisationsinitiator (D1) nach 5 h bei 50 °C einen Anteil an radikalischen Resten von 20 % oder mehr und weniger als 100 % und nach 5 h bei 70 °C einen Anteil an radikalischen Resten von 0 % oder mehr und weniger als 30 % aufweist und

wobei der radikalische Polymerisationsinitiator (D2) nach 5 h bei 70 °C einen Anteil an radikalischen Resten von 30 % oder mehr und weniger als 98 % aufweist;

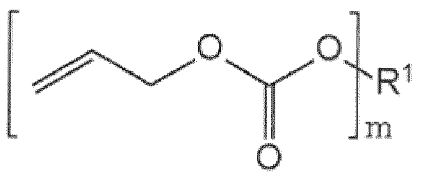

(1)

wobei in der allgemeinen Formel (1) $R^1$ für eine zweiwertige bis 20-wertige Gruppe steht, die von einem unverzweigten oder verzweigten aliphatischen Polyol mit 3 bis 35 Kohlenstoffatomen abgeleitet ist, die gegebenenfalls ein Heteroatom oder eine zweiwertige bis sechswertige Gruppe umfasst, die von einem cycloaliphatischen Polyol mit 5 bis 40 Kohlenstoffatomen abgeleitet ist, das gegebenenfalls ein Heteroatom

umfast, m für eine ganze Zahl von 2 bis 20 steht und $R^1$ keine Allyloxycarbonyl-Gruppe umfasst;

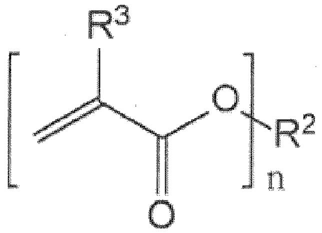
(2)

wobei in der allgemeinen Formel (2) $R^2$ für eine zweiwertige bis vierwertige organische Gruppe mit 1 bis 30 Kohlenstoffatomen steht, die gegebenenfalls ein Heteroatom oder eine aromatische Gruppe umfast, $R^3$ für ein Wasserstoffatom oder eine Methylgruppe steht, und n für eine ganze Zahl von 2 bis 4 steht;

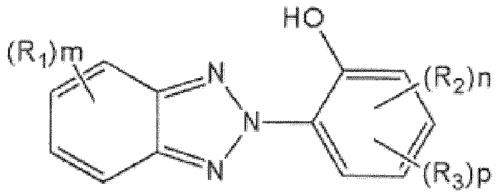
(3)

wobei in der allgemeinen Formel (3) $R_1$ und $R_2$ für eine Alkylgruppe mit 1 bis 8 Kohlenstoffatomen oder ein Halogenatom stehen, die gleich oder unterschiedlich sein können, wobei eine Vielzahl von $R_1$ oder eine Vielzahl von $R_2$ gleich oder unterschiedlich sein können, m für eine ganze Zahl von 0 bis 3 steht, n für eine ganze Zahl von 0 bis 3 steht, p für eine ganze Zahl von 0 bis 1 steht und $R_3$ für eine funktionelle Gruppe mit 2 bis 15 Kohlenstoffatomen steht, die eine Esterbindung umfasst;

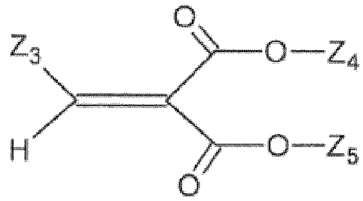
(4)

wobei in der allgemeinen Formel (4) $Z_3$ für eine aromatische organische Gruppe mit 6 bis 20 Kohlenstoffatomen, die gegebenenfalls substituiert ist, oder eine alizyklische Gruppe mit 5 bis 20 Kohlenstoffatomen, die gegebenenfalls substituiert ist, steht, $Z_4$ und $Z_5$ gleich oder unterschiedlich sein können und für eine Alkylgruppe mit 1 bis 6 Kohlenstoffatomen oder eine Alkoxygruppe mit 1 bis 6 Kohlenstoffatomen stehen;

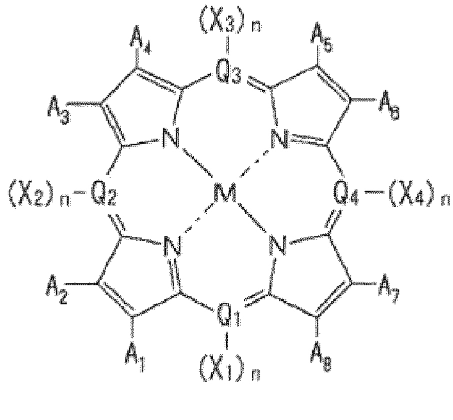
(5)

wobei in der allgemeinen Formel (5) $A_1$ bis As und $X_1$ bis $X_4$ jeweils unabhängig für ein Wasserstoffatom, ein Halogenatom, eine Nitrogruppe, eine Cyanogruppe, eine Hydroxygruppe, eine Aminogruppe, eine Carboxylgruppe, eine Schulfonsäuregruppe, eine unverzweigte, verzweigte oder zyklische Alkylgruppe mit 1 bis 20 Kohlenstoffatomen, eine Alkoxygruppe mit 1 bis 20 Kohlenstoffatomen, eine Aryloxygruppe mit 6 bis 20 Kohlenstoffatomen, eine Monoalkylaminogruppe mit 1 bis 20 Kohlenstoffatomen, eine Dialkylaminogruppe mit 2 bis 20 Kohlenstoffatomen, eine Dialkylaminogruppe mit 7 bis 20 Kohlenstoffatomen, eine Aralkylgruppe mit 7 bis 20 Kohlenstoffatomen, eine Arylgruppe mit 6 bis 20 Kohlenstoffatomen, eine Heteroarylgruppe, eine Alkylthiogruppe mit 6 bis 20 Kohlenstoffatomen oder eine Arylthiogruppe mit 6 bis 20 Kohlenstoffatomen stehen, $A_1$ bis $A_8$ gegebenenfalls über eine Linkergruppe einen Ring bilden, der kein aromatischer Ring ist, n = 0 oder 1 ist, $Q_1$ bis $Q_4$ jeweils unabhängig für ein Kohlenstoffatom oder ein Stickstoffatom stehen, M für zwei Wasserstoffatome, ein zweiwertiges Metallatom, ein zweiwertiges monosubstituiertes Metallatom, ein vierwertiges disubstituiertes Metallatom oder ein Oxymetallatom steht;

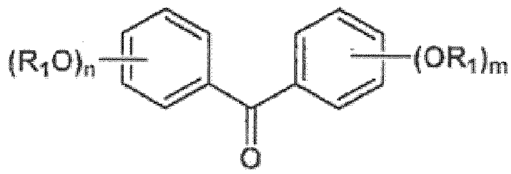
(6)

wobei in der allgemeinen Formel (6) $R_1$ für ein Wasserstoffatom oder eine unverzweigte oder verzweigte Alkylgruppe mit 1 bis 20 Kohlenstoffatomen steht, eine Vielzahl von $R_1$ gleich oder unterschiedlich sein können, m für eine ganze Zahl von 1 bis 3 steht, n für eine ganze Zahl von 1 bis 3 steht und die Summe von m + n = 3 bis 6 ist;

wobei die Farbstoffe zumindest eine Art, ausgewählt aus Anthrachinon-basierten Farbstoffen, Perinon-basierten Farbstoffen, Monoazo-basierten Farbstoffen, Diazo-basierten Farbstoffen und Phthalocyanin-basierten Farbstoffen sind; und
wobei die polymerisierbare Zusammensetzung nicht aus der polymerisierbaren Zusammensetzung aus Beispiel 15 der WO 2018/062384 besteht.

**3.** Polymerisierbare Zusammensetzung für ein optisches Material nach Anspruch 1 oder Formprodukt nach Anspruch 2,

wobei die Verbindung (A) zumindest eine Art umfasst, die aus der aus einer Bis(allylcarbonat)-Verbindung zumindest einer Art von Diol, ausgewählt aus Diethylenglykol, Dipropylenglykol, Triethylenglykol, Tetraethylenglykol, 1,3-Propandiol, 1,4-Butandiol, 1,5-Pentandiol, 1,6-Hexandiol, Neopentylglykol, 3-Methyl-1,5-pentandiol, 2-Methyl-2-ethyl-1,3-propandiol, 2,2-Diethyl-1,3-propandiol, 2,2,4-Trimethyl-1,3-pentandiol, 1,4-Dimethylolcyclohexan und 4,8-Bis(hydroxymethyl)-[5.2.1.$0^{2.6}$]tricyclodecan,

einer Tris(allylcarbonat)-Verbindung zumindest einer Art von Triol, ausgewählt aus Glycerin, Trimethylolpropan und Tris(hydroxyethyl)isocyanurat,
einer Tetra(allylcarbonat)-Verbindung zumindest einer Art von Tetraol, ausgewählt aus Pentaerythrit, Diglycerin und Ditrimethylolpropan,
einer Hexa(allylcarbonat)-Verbindung von Dipentaerythrit und
einer Hexa(allylcarbonat)-Verbindung von Bispentaerythrit
bestehenden Gruppe ausgewählt ist, und

die Verbindung (A) die Allylcarbonat-Verbindung (A) oder ein Gemisch aus der Allylcarbonat-Verbindung (A) und einem Oligomer davon ist.

**4.** Polymerisierbare Zusammensetzung für ein optisches Material nach Anspruch 1 oder 3, oder Formprodukt nach Anspruch 2 oder 3, wobei die Verbindung (A) zumindest eine Art, ausgewählt aus den folgenden ist:

(i) einer Diethylenglykolbis(allylcarbonat)-Verbindung,
(ii) einer Bis(allylcarbonat)-Verbindung eines Gemischs aus Diethylenglykol und Neopentylglykol,
(iii) einer Poly(allylcarbonat)-Verbindung eines Gemischs aus Diethylenglykol und Tris(hydroxyethyl)isocyanurat,
(iv) einer Poly(allylcarbonat)-Verbindung eines Gemischs aus Diethylenglykol und Trimethylolpropan,
(v) einer Poly(allylcarbonat)-Verbindung eines Gemischs aus Diethylenglykol und Pentaerythrit,
(vi) einer Poly(allylcarbonat)-Verbindung eines Gemischs aus Diethylenglykol, Neopentylglykol und Pentaerythrit und
(vii) einem Poly(allylcarbonat)-Gemisch, das eine Poly(allylcarbonat)-Verbindung eines Gemischs aus Diethylenglykol, Neopentylglykol und Pentaerythrit und eine Diethylen-glykolbis(allylcarbonat)-Verbindung umfasst; und

wobei die Verbindung (A) ein Gemisch aus der Allylcarbonat-Verbindung (A) und einem Oligomer davon umfasst.

5. Polymerisierbare Zusammensetzung für ein optisches Material nach einem der Ansprüche 1, 3 oder 4 oder Formprodukt nach einem der Ansprüche 2 bis 4, wobei die Verbindung (B) aus Verbindungen ausgewählt ist, die durch die allgemeine Formel (2-1) und die allgemeine Formel (2-2) dargestellt sind,

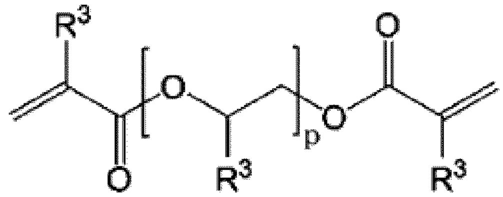

(2-1)

worin p für einen numerischen Wert von 1 bis 100 steht, $R^3$ für ein Wasserstoffatom oder eine Methylgruppe steht, die jeweils unterschiedlich sein können, und

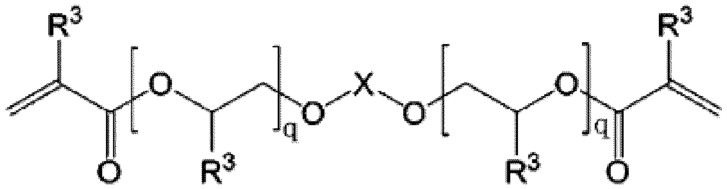

(2-2)

worin q jeweils für einen numerischen Wert von 1 oder mehr steht und die Summe von zwei q für einen numerischen Wert von 2 bis 100 steht, $R^3$ für ein Wasserstoffatom oder eine Methylgruppe steht, die jeweils unterschiedlich sein können, X für eine substituierte oder unsubstituierte, zweiwertige aromatische Gruppe oder eine substituierte oder unsubstituierte, zweiwertige aliphatische Gruppe steht, die gegebenenfalls eine aromatische Gruppe mit 1 bis 20 Kohlenstoffatomen umfasst.

6. Polymerisierbare Zusammensetzung für ein optisches Material nach Anspruch 5 oder Formprodukt nach Anspruch 5, wobei die Verbindung (B) aus den durch die allgemeine Formel (2-1) dargestellten Verbindungen ausgewählt ist, in denen p = 2 bis 4 ist.

7. Polymerisierbare Zusammensetzung für ein optisches Material nach einem der Ansprüche 1 oder 3 bis 6 oder Formprodukt nach einem der Ansprüche 2 bis 6,
wobei die Verbindung (C) aus Verbindungen, die durch die allgemeine Formel (3) bis (5) dargestellt sind, und Farbstoffen ausgewählt ist.

8. Polymerisierbare Zusammensetzung für ein optisches Material nach einem der Ansprüche 1 oder 3 bis 6 oder Formprodukt nach einem der Ansprüche 2 bis 6,
wobei die Verbindung (C) aus Verbindungen, die durch die allgemeinen Formeln (3), (5) und (6) dargestellt sind, und Farbstoffen ausgewählt ist.

9. Polymerisierbare Zusammensetzung für ein optisches Material nach einem der Ansprüche 1 oder 3 bis 8 oder Formprodukt nach einem der Ansprüche 2 bis 8,
wobei die polymerisierbare Zusammensetzung keine photochrome Verbindung umfasst.

10. Optisches Material, das Folgendes umfasst:
ein Formprodukt nach einem der Ansprüche 2 bis 9.

11. Kunststofflinse, die Folgendes umfasst:

ein Formprodukt nach einem der Ansprüche 2 bis 9.

**12.** Polarisierende Kunststofflinse, die Folgendes umfasst:

einen polarisierenden Film; und
eine Basismaterialschicht, die aus einem Formprodukt nach einem der Ansprüche 2 bis 9 besteht, die über zumindest einer Oberfläche des polarisierenden Films ausgebildet ist.

## Revendications

**1.** Composition polymérisable pour un matériau optique comprenant :

un composé de carbonate d'allyle (A) comprenant deux groupes allyloxycarbonyle ou plus qui est représenté par la formule générale (1) ;
un composé de (méth)acrylate (B) comprenant deux groupes (méth)acryle ou plus qui est représenté par la formule générale (2) ;
au moins un type de composé (C), choisi parmi les composés représentés par les formules générales (3) à (6) et les colorants décrits ci-dessous ; et
un initiateur de polymérisation (D) comprenant au moins un initiateur de polymérisation radicalaire (D1) et un initiateur de polymérisation radicalaire (D2),
dans laquelle, dans 100 % en poids d'un total du composé (A) et du composé (B), le composé (A) est inclus en une quantité supérieure à 0 % en poids et inférieure ou égale à 30 % en poids et le composé (B) est inclus en une quantité supérieure ou égale à 70 % en poids et inférieure à 100 % en poids,
l'initiateur de polymérisation radicalaire (D1) a un rapport résiduel radicalaire après 5 heures à 50 °C supérieur ou égal à 20 % et inférieur à 100 % et un rapport résiduel radicalaire après 5 heures à 70 °C supérieur ou égal à 0 % et inférieur à 30 %, et
l'initiateur de polymérisation radicalaire (D2) a un rapport résiduel radicalaire après 5 heures à 70 °C supérieur ou égal à 30 % et inférieur à 98 %,

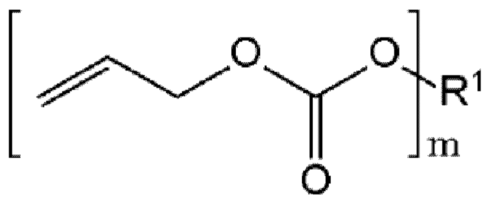

(1)

dans laquelle, dans la formule générale (1), $R^1$ représente un groupe divalent à de valence 20 dérivé d'un polyol aliphatique à chaîne ou ramifié ayant 3 à 35 atomes de carbone qui comprennent éventuellement un hétéroatome ou un groupe divalent à hexavalent dérivé d'un polyol cycloaliphatique ayant 5 à 40 atomes de carbone qui comprennent éventuellement un hétéroatome, m représente un nombre entier de 2 à 20, et $R^1$ ne comprend pas de groupe allyloxycarbonyle,

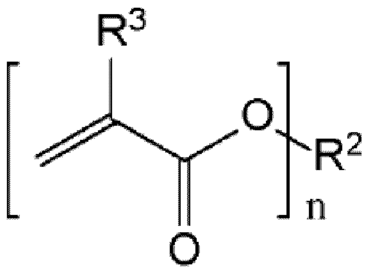

(2)

dans laquelle, dans la formule générale (2), $R^2$ représente un groupe organique divalent à tétravalent ayant 1 à 30 atomes de carbone qui comprennent éventuellement un hétéroatome ou un groupe aromatique, $R^3$ représente un atome d'hydrogène ou un groupe méthyle, et n représente un nombre entier de 2 à 4,

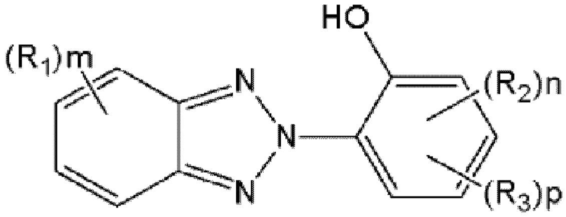

(3)

dans laquelle, dans la formule générale (3), $R_1$ et $R_2$ représentent un groupe alkyle ayant 1 à 8 atomes de carbone ou un atome d'halogène, qui peuvent être identiques ou différents, une pluralité de $R_1$ ou une pluralité de $R_2$ peuvent être identiques ou différents, m représente un nombre entier de 0 à 3, n représente un nombre entier de 0 à 3, p représente un nombre entier de 0 à 1, et $R_3$ représente un groupe fonctionnel ayant 2 à 15 atomes de carbone comprenant une liaison ester,

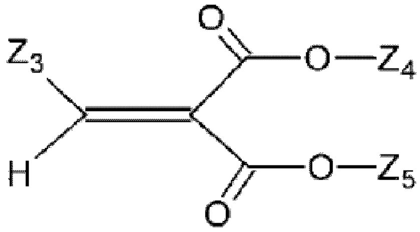

(4)

dans laquelle, dans la formule générale (4), $Z_3$ représente un groupe organique aromatique ayant 6 à 20 atomes de carbone qui peuvent être éventuellement substitués, ou un groupe alicyclique ayant 5 à 20 atomes de carbone qui peuvent être éventuellement substitués, $Z_4$ et $Z_5$ peuvent être identiques ou différents et représentent un groupe alkyle ayant 1 à 6 atomes de carbone ou un groupe alcoxy ayant 1 à 6 atomes de carbone,

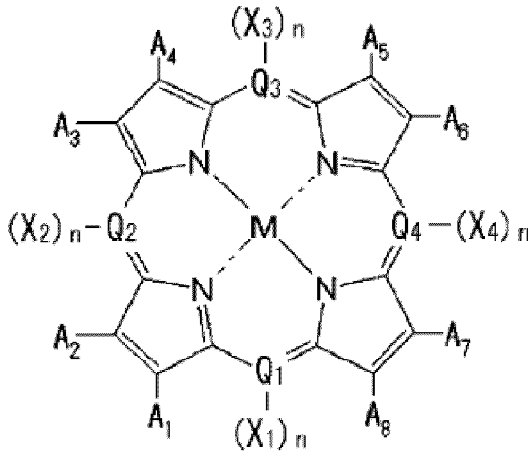

(5)

dans laquelle, dans la formule générale (5), $A_1$ à $A_8$ et $X_1$ à $X_4$ représentent chacun indépendamment un atome d'hydrogène, un atome d'halogène, un groupe nitro, un groupe cyano, un groupe hydroxy, un groupe amino, un groupe carboxyle, un groupe acide sulfonique, un groupe alkyle linéaire, ramifié ou cyclique ayant 1 à 20 atomes de carbone, un groupe alcoxy ayant 1 à 20 atomes de carbone, un groupe aryloxy ayant 6 à 20 atomes de carbone, un groupe monoalkylamino ayant 1 à 20 atomes de carbone, un groupe dialkylamino ayant 2 à 20 atomes de carbone, un groupe dialkylamino ayant 7 à 20 atomes de carbone, un groupe aralkyle ayant 7 à 20 atomes de carbone, un groupe aryle ayant 6 à 20 atomes de carbone, un groupe hétéroaryle, un groupe alkylthio ayant 6 à 20 atomes de carbone, ou un groupe arylthio ayant 6 à 20 atomes de carbone, $A_1$ à $A_8$ forment éventuellement un cycle autre qu'un cycle aromatique par le biais d'un groupe de liaison, n représente 0 ou 1, $Q_1$ à $Q_4$ représentent chacun indépendamment un atome de carbone ou un atome d'azote, M représente deux atomes d'hydrogène, un atome de métal divalent, un atome de métal monosubstitué divalent, un atome de métal disubstitué tétravalent ou un atome d'oxymétal,

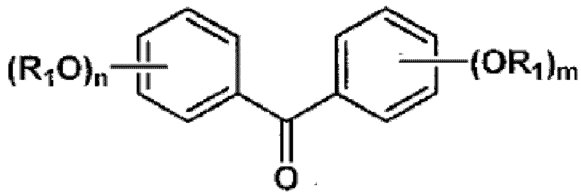

(6)

dans laquelle, dans la formule générale (6), $R_1$ représente un atome d'hydrogène ou un groupe alkyle linéaire ou ramifié ayant 1 à 20 atomes de carbone, une pluralité de $R_1$ peuvent être identiques ou différentes, m représente un nombre entier de 1 à 3, n représente un nombre entier de 1 à 3, et une somme de m et n est un nombre entier de 3 à 6,
dans laquelle les colorants sont d'au moins un type choisi parmi les colorants à base d'anthraquinone, les colorants à base de périnone, les colorants à base de monoazoïque, les colorants à base de diazoïque et les colorants à base de phtalocyanine, et
dans laquelle la composition polymérisable ne comprend pas la composition polymérisable de l'exemple 15 de WO 2018/062384.

**2.** Produit moulé obtenu par durcissement d'une composition polymérisable pour un matériau optique, la composition polymérisable pour un matériau optique comprenant :

un composé de carbonate d'allyle (A) comprenant deux groupes allyloxycarbonyle ou plus qui est représenté par la formule générale (1) ;
un composé de (méth)acrylate (B) comprenant deux groupes (méth)acryle ou plus qui est représenté par la formule générale (2) ;
au moins un type de composé (C), choisi parmi les composés représentés par les formules générales (3) à (6) et les colorants décrits ci-dessous ; et
un initiateur de polymérisation (D) comprenant au moins un initiateur de polymérisation radicalaire (D1) et un initiateur de polymérisation radicalaire (D2),
dans lequel, dans 100 % en poids d'un total du composé (A) et du composé (B), le composé (A) est inclus en une quantité supérieure à 0 % en poids et inférieure ou égale à 30 % en poids et le composé (B) est inclus en une quantité supérieure ou égale à 70 % en poids et inférieure à 100 % en poids,
l'initiateur de polymérisation radicalaire (D1) a un rapport résiduel radicalaire après 5 heures à 50 °C supérieur ou égal à 20 % et inférieur à 100 % et un rapport résiduel radicalaire après 5 heures à 70 °C supérieur ou égal à 0 % et inférieur à 30 %, et
l'initiateur de polymérisation radicalaire (D2) a un rapport résiduel radicalaire après 5 heures à 70 °C supérieur ou égal à 30 % et inférieur à 98 %,

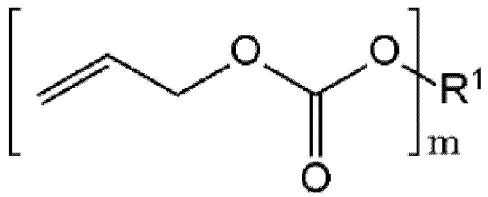

(1)

dans lequel, dans la formule générale (1), $R^1$ représente un groupe divalent à de valence 20 dérivé d'un polyol aliphatique à chaîne ou ramifié ayant 3 à 35 atomes de carbone qui comprennent éventuellement un hétéroatome ou un groupe divalent à hexavalent dérivé d'un polyol cycloaliphatique ayant 5 à 40 atomes de carbone qui comprennent éventuellement un hétéroatome, m représente un nombre entier de 2 à 20, et $R^1$ ne comprend pas de groupe allyloxycarbonyle,

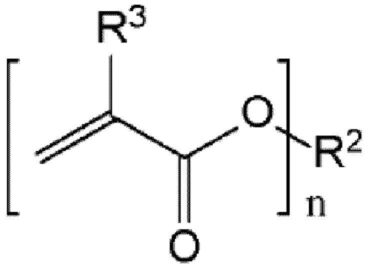

(2)

dans lequel, dans la formule générale (2), $R^2$ représente un groupe organique divalent à tétravalent ayant 1 à 30 atomes de carbone qui comprennent éventuellement un hétéroatome ou un groupe aromatique, $R^3$ représente un atome d'hydrogène ou un groupe méthyle, et n représente un nombre entier de 2 à 4,

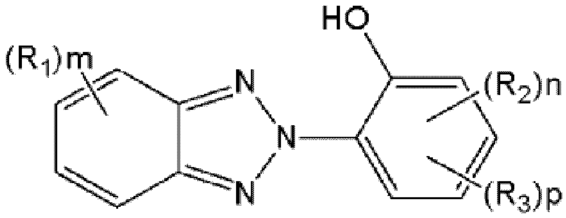

(3)

dans lequel, dans la formule générale (3), $R_1$ et $R_2$ représentent un groupe alkyle ayant 1 à 8 atomes de carbone ou un atome d'halogène, qui peuvent être identiques ou différents, une pluralité de $R_1$ ou une pluralité de $R_2$ peuvent être identiques ou différents, m représente un nombre entier de 0 à 3, n représente un nombre entier de 0 à 3, p représente un nombre entier de 0 à 1, et $R_3$ représente un groupe fonctionnel ayant 2 à 15 atomes de carbone comprenant une liaison ester,

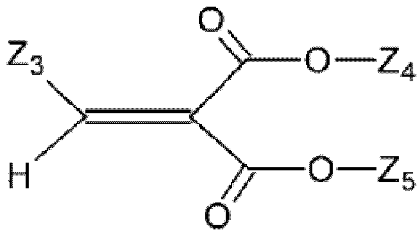

(4)

dans lequel, dans la formule générale (4), $Z_3$ représente un groupe organique aromatique ayant 6 à 20 atomes de carbone qui peuvent être éventuellement substitués, ou un groupe alicyclique ayant 5 à 20 atomes de carbone qui peuvent être éventuellement substitués, $Z_4$ et $Z_5$ peuvent être identiques ou différents et représentent un groupe alkyle ayant 1 à 6 atomes de carbone ou un groupe alcoxy ayant 1 à 6 atomes de carbone,

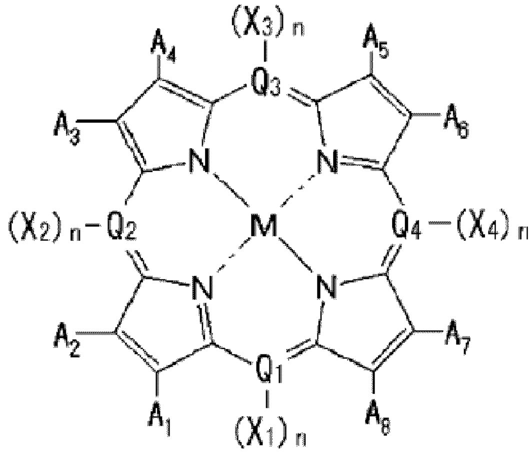

(5)

dans lequel, dans la formule générale (5), $A_1$ à $A_8$ et $X_1$ à $X_4$ représentent chacun indépendamment un atome d'hydrogène, un atome d'halogène, un groupe nitro, un groupe cyano, un groupe hydroxy, un groupe amino, un groupe carboxyle, un groupe acide sulfonique, un groupe alkyle linéaire, ramifié ou cyclique ayant 1 à 20 atomes de carbone, un groupe alcoxy ayant 1 à 20 atomes de carbone, un groupe aryloxy ayant 6 à 20 atomes de carbone, un groupe monoalkylamino ayant 1 à 20 atomes de carbone, un groupe dialkylamino ayant 2 à 20 atomes de carbone, un groupe dialkylamino ayant 7 à 20 atomes de carbone, un groupe aralkyle ayant 7 à 20 atomes de carbone, un groupe aryle ayant 6 à 20 atomes de carbone, un groupe hétéroaryle, un groupe alkylthio ayant 6 à 20 atomes de carbone, ou un groupe arylthio ayant 6 à 20 atomes de carbone, $A_1$ à $A_8$ forment éventuellement un cycle autre qu'un cycle aromatique par le biais d'un groupe de liaison, n représente 0 ou 1, $Q_1$ à $Q_4$ représentent chacun indépendamment un atome de carbone ou un atome d'azote, M représente deux atomes d'hydrogène, un atome de métal divalent, un atome de métal monosubstitué divalent, un atome de métal disubstitué tétravalent ou un atome d'oxymétal,

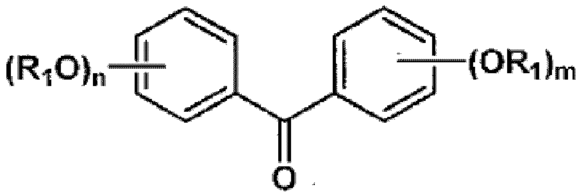

(6)

dans lequel, dans la formule générale (6), $R_1$ représente un atome d'hydrogène ou un groupe alkyle linéaire ou ramifié ayant 1 à 20 atomes de carbone, une pluralité de $R_1$ peuvent être identiques ou différentes, m représente un nombre entier de 1 à 3, n représente un nombre entier de 1 à 3, et une somme de m et n est un nombre entier de 3 à 6,
dans lequel les colorants sont d'au moins un type choisi parmi les colorants à base d'anthraquinone, les colorants à base de périnone, les colorants à base de monoazoïque, les colorants à base de diazoïque et les colorants à base de phtalocyanine,
dans lequel le produit moulé n'est pas le produit moulé de l'exemple 15 de WO 2018/062384.

**3.** Composition polymérisable pour un matériau optique selon la revendication 1 ou produit moulé selon la revendication 2,

dans lesquels le composé (A) comprend au moins un type choisi dans le groupe constitué par un composé de bis(carbonate d'allyle) d'au moins un type de diol choisi parmi le diéthylène glycol, le dipropylène glycol, le triéthylène glycol, le tétraéthylène glycol, le 1,3-propanediol, le 1,4-butanediol, le 1,5-pentanediol, le 1,6-hexanediol, le néopentyl glycol, le 3-méthyl-1,5-pentanediol, le 2-méthyl-2-éthyl-1,3-propanediol, le 2,2-diéthyl-1,3-propanediol, le 2,2,4-triméthyl-1,3-pentanediol, le 1,4-diméthylolcyclohexane et le 4,8-bis(hydroxyméthyl)-[5.2.1.$0^{2,6}$]tricyclodécane,
un composé de tris(carbonate d'allyle) d'au moins un type de triol choisi parmi le glycérol, le triméthylolpropane et l'isocyanurate de tris(hydroxyéthyle),
un composé de tétra(carbonate d'allyle) d'au moins un type de tétraol choisi parmi le pentaérythritol, le diglycérol et le ditriméthylol propane,
un composé d'hexa(carbonate d'allyle) de dipentaérythritol, et
un composé d'hexa(carbonate d'allyle) de bispentaérythritol, et
le composé (A) est le composé de carbonate d'allyle (A) ou un mélange du composé de carbonate d'allyle (A) et d'un oligomère de celui-ci.

**4.** Composition polymérisable pour un matériau optique selon la revendication 1 ou 3, ou produit moulé selon la revendication 2 ou 3 dans lesquels le composé (A) est au moins un composé choisi parmi

(i) un composé de bis(allyl carbonate) de diéthylène glycol,
(ii) un composé de bis(carbonate d'allyle) d'un mélange de diéthylène glycol et de néopentyl glycol,
(iii) un composé de poly(carbonate d'allyle) d'un mélange de diéthylène glycol et d'isocyanurate de tris(hydroxyéthyle),
(iv) un composé de poly(carbonate d'allyle) d'un mélange de diéthylène glycol et de triméthylolpropane,
(v) un composé de poly(carbonate d'allyle) d'un mélange de diéthylène glycol et de pentaérythritol,
(vi) un composé de poly(carbonate d'allyle) d'un mélange de diéthylène glycol, de néopentyl glycol et de pentaérythritol, et
(vii) un mélange de poly(carbonate d'allyle) comprenant un composé de poly(carbonate d'allyle) d'un mélange de diéthylène glycol, de néopentyl glycol et de pentaérythritol, et un composé de bis(carbonate d'allyle) de diéthylène glycol, et

le composé (A) comprend un mélange du composé de carbonate d'allyle (A) et d'un oligomère de celui-ci.

**5.** Composition polymérisable pour un matériau optique selon l'une quelconque des revendications 1, 3 ou 4, ou produit moulé selon l'une quelconque des revendications 2 à 4 dans lesquels le composé (B) est choisi parmi les composés représentés par la formule générale (2-1) et la formule générale (2-2),

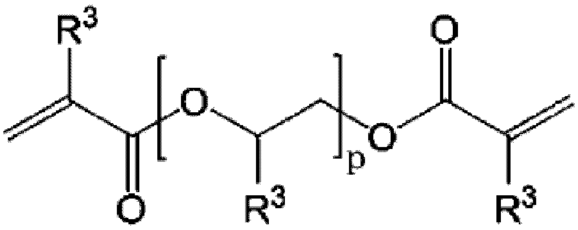

(2-1)

dans laquelle p représente une valeur numérique de 1 à 100, $R^3$ représente un atome d'hydrogène ou un groupe méthyle, et peuvent ne pas être chacun identiques, et

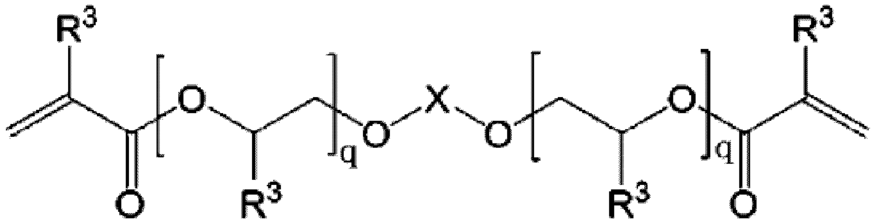

(2-2)

dans laquelle q représente chacun une valeur numérique de 1 ou plus et un total de deux q représentent une valeur numérique de 2 à 100, $R^3$ représente un atome d'hydrogène ou un groupe méthyle et peuvent ne pas être chacun identiques, X représente un groupe aromatique divalent substitué ou non substitué ou un groupe aliphatique divalent substitué ou non substitué qui peut comprendre un groupe aromatique ayant 1 à 20 atomes de carbone.

**6.** Composition polymérisable pour un matériau optique selon la revendication 5, ou article moulé selon la revendication 5
dans lesquels le composé (B) est choisi parmi les composés représentés par la formule générale (2-1) dans laquelle p vaut de 2 à 4.

**7.** Composition polymérisable pour un matériau optique selon l'une quelconque des revendications 1 ou 3 à 6, ou produit moulé selon l'une quelconque des revendications 2 à 6
dans lesquels le composé (C) est choisi parmi les composés représentés par les formules générales (3) à (5) et les colorants.

**8.** Composition polymérisable pour un matériau optique selon l'une quelconque des revendications 1 ou 3 à 6, ou produit moulé selon l'une quelconque des revendications 2 à 6
dans lesquels le composé (C) est choisi parmi les composés représentés par les formules générales (3), (5), (6) et les colorants.

**9.** Composition polymérisable pour un matériau optique selon l'une quelconque des revendications 1 ou 3 à 8, ou produit moulé selon l'une quelconque des revendications 2 à 8
dans lesquels la composition polymérisable ne comprend pas de composé photochrome.

**10.** Matériau optique comprenant :

le produit moulé selon l'une quelconque des revendications 2 à 9.

**11.** Lentille en plastique comprenant :
le produit moulé selon l'une quelconque des revendications 2 à 9.

**12.** Lentille polarisante en plastique comprenant :

un film polarisant ; et
une couche de matériau de base constituée du produit moulé selon l'une quelconque des revendications 2 à 9 qui est formée sur au moins une surface du film polarisant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H04502931 W
- JP 2013213937 A
- JP H10147609 A
- JP H08127608 A
- JP S61144601 A
- JP 2009019157 A
- US 8691926 B2
- US 5310577 A
- EP 3521322 A1
- EP 35304 A
- US 4812545 A
- JP 2017234197 A
- JP 2018104866 A

### Non-patent literature cited in the description

- **KIRK-OTHMER.** *Encyclopedia of Chemical Technology,* vol. 2, 111-112